# EUROPEAN PATENT SPECIFICATION

(11) **EP 4 399 753 B1**
(45) Date of publication and mention of the grant of the patent: **11.09.2024**
(21) Application number: 22844533.4
(22) Date of filing: 29.12.2022
(51) Int. Cl.: H01M 8/0254, H01M 8/10

(54) **FUEL CELL BIPOLAR PLATES**
BIPOLARE PLATTEN FÜR BRENNSTOFFZELLEN
PLAQUES BIPOLAIRES DE PILE À COMBUSTIBLE

(30) Priority: 30.12.2021 EP 21218388; 07.10.2022 EP 22200384
(43) Date of publication of application: 17.07.2024
(73) Proprietor: Sydrogen Energy Pte. Ltd., 139959 Ayer Rajah Industrial Estate (SG)
(72) Inventor: SHI, Xu, Singapore 139959 (SG); LIM, Kevin Chee Kuan, Singapore 139959 (SG)
(74) Representative: Schlich, George
(86) International application number: PCT/EP2022/088004
(87) International publication number: WO 2023/126475

(56) References cited:
- US-A1- 2002 168 561
- US-A1- 2003 157 387
- US-A1- 2012 129 073
- US-A1- 2015 180 059
- US-A1- 2016 211 533

## Description

### Introduction

The present invention relates to bipolar plates for use in hydrogen fuel cells (in particular PEM fuel cells) and to methods of manufacture thereof.

### Background to the Invention

An increasing awareness of the effects of climate change has led to an increase in research on alternative "fossil free" energy sources, such as hydrogen. Hydrogen fuel cells have been developed that produce electrical power through an electrochemical, typically catalysed, oxidation of hydrogen to form water.

A widely used hydrogen fuel cell is the proton exchange membrane (PEM) fuel cell which comprises a semipermeable membrane which permits protons to pass through the membrane while acting as a barrier to electrons and reactants (e.g. hydrogen and oxygen gas). PEM fuel cells exhibits a number of advantages including having a high energy conversion rate, being environmentally friendly and having a low operating temperature.

As each cell in a PEM fuel cell produces relatively low voltages, multiple PEM cells can be connected in series to increase the output voltage. The multi-cell assembly is sometimes referred to as a fuel cell stack. Adjacent PEM cells are connected together, the cathode of one being connected to the anode of another, effectively forming a bipolar plate which conducts electricity from one PEM cell to an adjacent PEM cell. Each cathode and anode plate, and hence each half of the bipolar plate, typically also contains channels on their surfaces along which reactants or coolants can be fed. As a core component of the hydrogen fuel cell, the bipolar plate has many important functions, including conducting current, supporting membrane electrodes, uniformly transporting and isolating reaction gases and circulating coolant for rapid cooling.

When adjacent PEM cells are connected bipolar plates are formed from the respective two separate plates (an anode and a cathode) of the neighbouring cells. The plates are typically welded together. There are a number of problems associated with this. In particular, oxidation and corrosion at the welding site can reduce the efficacy of bipolar plates. Bipolar plates are nevertheless conventional in this field when there are multiple cells in series.

US 2020/212470 discloses a fuel cell unit formed from a plurality of flow plate assemblies disposed in a stack configuration, with adjacent flow plate assemblies disposed at an offset angle relative to each other.

DE 10 2020 207353 discloses bipolar plates for a fuel cell system, wherein the plates are aligned such that the flow of coolant through a first channel structure and a second channel structure are different.

US 2015/325876 discloses a fuel cell having an anode/cathode stack with first and second channel structures, having first and second feeding structures respectively.

US 4292 379 discloses a fuel cell system intended to alleviate uneven reaction distribution.

US 2019/169759 discloses a stack of interconnected solid oxide electrochemical gas separator (SOEGS) cells separated by interconnectors.

US 2012/129073 discloses a fuel cell stack comprising adjacent bipolar plates with flow channel and membrane electrode assemblies disposed between them.

US 2002/168561 discloses an electrochemical cell stack having alternating arranged membrane electrode assemblies and separator plates.

US 20160211533 discloses a fuel cell comprising a power generation unit stack with first and second wave-like fuel gas flow passage structures, having first and second passage phases structures respectively.

US 20150180059 discloses a humidifier for transferring water vapour comprised a stack of thin plates having a planar sealing surface at their edges, along which they are sealed.

An aim of the invention is to ameliorate problems with known fuel cell stacks or provide an alternative to known fuel cell stacks and to the bipolar plates between adjacent fuel cells. An aim of particular embodiments is to provide an improved bipolar plate for a fuel cell stack and to provide a fuel cell stack incorporating one or more improved bipolar plates, and methods of making the same.

### Summary of the Invention

The present invention provides a hydrogen fuel cell unit comprising, in order
(i) a first bipolar plate having a front face and a rear face, the rear face being an anode in the unit,
(ii) a first membrane electrode assembly,
(iii) a second bipolar plate having a front face and a rear face, the front face being a cathode in the unit and the rear face being an anode in the unit,
   wherein the first membrane electrode assembly is between the first and second bipolar plates, and a flow path is provided between the rear face of the first bipolar plate and the first membrane electrode assembly for flow of hydrogen, and a flow path is provided between the front face of the second bipolar plate and the first membrane electrode assembly for flow of oxygen,
(iv) a second membrane electrode assembly, and
(v) a third bipolar plate having a front face and a rear face, the front face being a cathode in the unit,

wherein the second membrane electrode assembly is between the second and third bipolar plates, and a flow path is provided between the rear face of the second bipolar plate and the second membrane electrode assembly for flow of hydrogen, and a flow path is provided between the front face of the third bipolar plate and the second membrane electrode assembly for flow of oxygen.
wherein the bipolar plates comprise channels for flow of oxygen and wherein the oxygen flow channels of adjacent plates repeatedly diverge and converge across the plate,
wherein the bipolar plates further comprise channels for flow of hydrogen and wherein the hydrogen and oxygen flow channels are substantially transverse to each other, and
wherein the oxygen flow channels are formed by an indentation in the bipolar plate and transverse hydrogen flow channels comprise a notch in the indentation that forms the oxygen flow channels, or vice versa, i.e. wherein hydrogen flow channels are formed by an indentation in the bipolar plate and transverse oxygen flow channels comprise a notch in the indentation that forms the hydrogen flow channels.

Preferably, the bipolar plates comprise channels for flow of oxygen, wherein the oxygen flow channels of adjacent plates repeatedly diverge and converge across the plate, e.g. in a criss-cross pattern.

The invention also provides a method of making a bipolar plate, comprising
(i) providing a sheet of metal or alloy;
(ii) stamping the sheet to form a bipolar plate comprising a plurality of hydrogen channels and a plurality of oxygen channels,
wherein the bipolar plates can be used to make a hydrogen fuel cell unit according to the invention.

Further, the invention provides a method of making a hydrogen fuel cell, comprising
(i) providing a first bipolar plate having a front face and a rear face, the rear face being an anode, and a second bipolar plate having a front face and a rear face, the front face being a cathode and the rear face being an anode,
(ii) locating a first membrane electrode assembly between the first and second bipolar plates,
   wherein when the first membrane electrode assembly is between the first and second bipolar plates a flow path is provided between the rear face of the first bipolar plate and the first membrane electrode assembly for flow of hydrogen, and a flow path is provided between the front face of the second bipolar plate and the first membrane electrode assembly for flow of oxygen,
(iv) providing a third bipolar plate having a front face and a rear face, the front face being a cathode, and
(v) locating a second membrane electrode assembly between the second and third bipolar plates,
wherein when the second membrane electrode assembly is between the second and third bipolar plates:
a flow path is provided between the rear face of the second bipolar plate and the second membrane electrode assembly for flow of hydrogen, and a flow path is provided between the front face of the third bipolar plate and the second membrane electrode assembly for flow of oxygen, and
the flow path for flow of hydrogen and the flow path for flow of oxygen are substantially transverse to each other,
wherein the bipolar plates comprise channels for flow of hydrogen and channels for flow of oxygen and wherein the hydrogen and oxygen flow channels are substantially transverse to each other, and
wherein the oxygen flow channels are formed by an indentation in the bipolar plate and transverse hydrogen flow channels comprise a notch in the indentation that forms the oxygen flow channels, or vice versa, i.e. wherein hydrogen flow channels are formed by an indentation in the bipolar plate and transverse oxygen flow channels comprise a notch in the indentation that forms the hydrogen flow channels.

All plates can be the same design, each stamped from a sheet of metal or alloy, with adjacent plates rotated 180 degrees with respect to each other.

### Details of the Invention

A hydrogen fuel cell unit of the invention thus comprises, in order
(i) a first bipolar plate having a front face and a rear face, the rear face being an anode in the unit,
(ii) a first membrane electrode assembly,
(iii) a second bipolar plate having a front face and a rear face, the front face being a cathode in the unit and the rear face being an anode in the unit,
   wherein the first membrane electrode assembly is between the first and second bipolar plates (e.g. between the rear side of the first bipolar plate and the front side of the second bipolar plate), and a flow path is provided between the rear face of the first bipolar plate and the first membrane electrode assembly for flow of hydrogen, and a flow path is provided between the front face of the second bipolar plate and the first membrane electrode assembly for flow of oxygen,
(iv) a second membrane electrode assembly, and
(v) a third bipolar plate having a front face and a rear face, the front face being a cathode in the unit,

wherein the second membrane electrode assembly is between the second and third bipolar plates (e.g. between the rear side of the second bipolar plate and the front side of the third bipolar plate), and a flow path is provided between the rear face of the second bipolar plate and the second membrane electrode assembly for flow of hydrogen, and a flow path is provided between the front face of the third bipolar plate and the second membrane electrode assembly for flow of oxygen,
wherein the bipolar plates comprise channels for flow of oxygen and wherein the oxygen flow channels of adjacent plates repeatedly diverge and converge across the plate,
wherein the bipolar plates further comprise channels for flow of hydrogen and wherein the hydrogen and oxygen flow channels are substantially transverse to each other, and
wherein the oxygen flow channels are formed by an indentation in the bipolar plate and transverse hydrogen flow channels comprise a notch in the indentation that forms the oxygen flow channels, or vice versa, i.e. wherein hydrogen flow channels are formed by an indentation in the bipolar plate and transverse oxygen flow channels comprise a notch in the indentation that forms the hydrogen flow channels.

The plates comprise channels for flow of hydrogen (also referred to as hydrogen flow channels), each channel having an inlet and an outlet. The respective inlets and outlets of hydrogen flow channels of adjacent plates in the fuel cell unit can be aligned, suitably vertically aligned in a vertical stack of plates. In a stack this makes design of gaskets between plates simple; e.g. the same gasket can be used throughout on the cathode side of each plate (e.g. to seal the hydrogen inlets and outlets on the cathode side of the plate to prevent hydrogen flow on the cathode side).

Each hydrogen flow channel further comprises a conduit between its inlet and outlet. The conduits or channels of adjacent plates in the fuel cell are preferably not vertically aligned along the whole of their length. Adjacent plates therefore do not nest together when held, e.g. clamped, into a stack that is part of the fuel cell. Portions of adjacent plates that abut each other hold the membrane electrode assembly between adjacent plates, assisting sealing of hydrogen and oxygen channels to keep those respective channels isolated from each other. Non-alignment of channels along part of their length means also that adjacent plates support each other in a stack and hold the membrane sealed between plates.

As shown in examples described in more detail below, hydrogen flow channels of adjacent plates may have their respective inlets vertically aligned and then the hydrogen flow channels diverge and converge across the plate, finally converging at vertically aligned outlets. The hydrogen flow channels may repeatedly diverge and converge across the plate, e.g. in a criss-cross pattern (regardless of whether the inlets and outlets of adjacent plates are vertically aligned). In preferred embodiments, the hydrogen flow channels of adjacent plates may diverge and converge in a regular pattern.

The plates comprise channels for flow of oxygen (also referred to as oxygen flow channels), each channel having an inlet and an outlet. The respective inlets and outlets of oxygen flow channels of adjacent plates in the fuel cell can also and independently be aligned, suitably vertically aligned in a vertical stack of plates. Again, gasket design can thus be simplified since the same gasket can be used on the anode side of each plate (e.g. to seal the oxygen inlets and outlets on the anode side of the plate to prevent the flow of oxygen on the anode side).

The oxygen flow channels further each comprise a conduit between its inlet and outlet. The conduits of the oxygen flow channels of adjacent plates in the fuel cell are not vertically aligned along the whole of their length. Again, this prevents nesting of adjacent plates and assists in tightly holding the membrane electrode assembly in sealing engagement between the plates. Adjacent plates can better support each other in a stack as a result of this partial non-alignment, with it being preferred that portions of both the hydrogen flow channels and portions of the oxygen flow channels are not aligned.

As shown in examples described in more detail below, oxygen flow channels of adjacent plates may have their respective inlets vertically aligned and then the oxygen flow channels diverge and converge across the plate, finally converging at vertically aligned outlets. The oxygen flow channels may repeatedly diverge and converge across the plate, e.g. in a criss-cross pattern (regardless of whether the inlets and outlets of adjacent plates are vertically aligned). In preferred embodiments, the oxygen flow channels of adjacent plates may diverge and converge in a regular (i.e. repetitive) pattern.

With reference to the examples below, it will be appreciated that hydrogen and oxygen flow channels may be defined by a combination of indentations in one plate and the membrane electrode assembly held between that plate and an adjacent plate.

As shown in more detail in examples below, the bipolar plate may comprise hydrogen and oxygen flow channels that are substantially transverse to each other. For example, hydrogen channels may run substantially left to right across a plate while oxygen flow channels run substantially back to front across the plate, or vice versa. Suitably, most of the hydrogen flow channels are substantially transverse to most of the oxygen flow channels. In specific embodiments, all of the hydrogen flow channels are substantially transverse to all of the oxygen flow channels.

An advantage of the invention is that each plate can be stamped from a single sheet, with no need to weld or otherwise connect respective anode and cathode sides to form, in effect, a bipolar plate. Instead, each stamped plate of the invention forms, on its own, a bipolar plate.

Hydrogen and oxygen flow channels are formed by the interface of one plate, preferably a stamped plate, with the membrane electrode assembly - which membrane is held between two plates. A projection on a plate is held in sealing engagement against the membrane and an indentation on the plate forms a channel between the indentation and the membrane.

For transverse flow, in accordance with embodiments of the invention, hydrogen channels and oxygen channels pass across each other. Oxygen flow channels can suitably be formed by an indentation in the bipolar plate and transverse hydrogen flow channels can at the same time comprise a notch in the indentation that forms the oxygen flow channels. The notch may lower the height of the oxygen channel at that point, forming a hydrogen channel on the other side between the notch and the membrane. The opposite is also an option. Thus, hydrogen flow channels can be formed by an indentation in the bipolar plate and transverse oxygen flow channels can comprise a notch in the indentation that forms the hydrogen flow channels.

One effect of the cross-over of hydrogen and oxygen flow channels, in embodiments of the invention, is that, as mentioned, the bipolar plate can be stamped from a single sheet of material. As illustrated in the examples below, with plates stacked vertically on top of each other a horizontal cross-section of the plate (i.e. a plane through the centre of each plate, perpendicular to the vertical direction of plate stacking) can be taken such that the cross-section passes through both hydrogen and oxygen flow channels. This is not the case for known hydrogen fuel cell stacks.

In preferred embodiments of the invention, all plates, e.g. each of the first, second and third bipolar plates of the hydrogen fuel cell unit, are the same design. This means that not only can the plates be made by stamping, also only a single stamping tool is needed. Adjacent plates are conveniently arranged in a stack with adjacent plates rotated 180 degrees with respect to each other (suitably about an axis perpendicular to the plane of the plate). The non-symmetrical plate design means the plates can effectively be stacked together, forming the hydrogen and oxygen flow channels while not nesting channels in adjacent plates and while retaining sufficient plate-to-plate contact to hold the membrane between the plates to form sealed channels that keep the hydrogen and oxygen sides separate.

In such embodiments, the bipolar plates lack rotational symmetry about a line through the centre of the plate in the vertical direction of stacking (i.e. a line through the centre of the plate perpendicular to the plane of the plate). Therefore, by rotating adjacent bipolar plates 180 degrees with respect to each other, the indentations on the plates do not align, meaning the plates cannot nest. In preferred embodiments, the lack of rotational symmetry is due to the shape of the oxygen flow channels.

In embodiments where the bipolar plate lacks overall rotational symmetry, there may still be rotational symmetry between particular features or elements of the plates. For example, there may be rotational symmetry of manifold apertures of each plate. Preferably, there is order 2 rotational symmetry of manifold apertures on each bipolar plate. That is when any bipolar plate is rotated from a first position through 180 degrees about a line through the centre of the plate in the vertical direction of plate stacking to a second position, the position of the manifold apertures in the first position map the position of the manifold apertures in the second position. Such rotational symmetry allows manifold apertures of adjacent plates to vertically align, forming a manifold.

Independently, there may be rotational symmetry (e.g. order 2 rotational symmetry) of inlets and outlets of the hydrogen and/or oxygen channels on the bipolar plate. Preferably, there is order 2 rotational symmetry of the inlets and outlets of hydrogen and/or oxygen flow channels on each bipolar plate. That is when any bipolar plate is rotated from a first position through 180 degrees about a line through the centre of the plate in the vertical direction of plate stacking to a second position, the position of the inlets and outlets of the hydrogen and/or oxygen channels on each bipolar plate in the first position map the position of the inlets and outlets in the second position. Such rotational symmetry allows the inlets and outlets of the hydrogen and/or oxygen channels to vertically align in a stack of plates where adjacent plates are rotated 180 degrees with respect to each other, as described above.

In alternative embodiments of the invention a different stamping tool is used to form adjacent bipolar plates (e.g. the first and third bipolar plate are stamped using the same stamping tool, whilst the second bipolar plate is stamped using a different stamping tool). When two (or more) stamping tools are used, adjacent plates do not need to be rotated to prevent nesting of the channels of adjacent plates. In these embodiments there are preferably 2 bipolar plate designs, wherein the hydrogen flow channels and/or the oxygen flow channels of adjacent plates are not aligned along the whole of their lengths, adjacent plates thus being prevented from nesting.

In such embodiments where there are 2 bipolar plate designs, it is preferred that particular features or elements remain in the same position in both designs. For example, manifold apertures and, independently, inlets and outlets of hydrogen and/or oxygen channels are preferably in the same position in both designs.

Also provided herein is a bipolar plate for a fuel cell unit of the invention with no rotational symmetry about a line through the centre of the plate in the vertical direction of plate stacking (i.e. perpendicular to the plane of the plate). The bipolar plate is suitable to be any of the first bipolar plate, second bipolar plate and/or third bipolar plate in the hydrogen fuel cell unit described above.

In preferred embodiments, the lack of rotational symmetry is due to the shape of the oxygen flow channels. As noted above, even in embodiments where the bipolar plate has no overall rotational symmetry, there may still be rotational symmetry between particular features or elements of the plate. For example, there may still be rotational symmetry between manifold apertures on the bipolar plate, or independently between the inlets and outlets of hydrogen and/or oxygen flow channels, as described above. The rotational symmetry of particular elements may be order 2 rotational symmetry, i.e. the elements will map onto themselves twice through each rotation of 360 degrees. In preferred embodiments, the bipolar plate comprises two or more manifold apertures and there is rotational symmetry of the manifold apertures. It is particularly preferred that the rotational symmetry of the manifold apertures is order 2 rotational symmetry.

The bipolar plate is preferably stamped from a single sheet of metal or alloy, e.g. steel, titanium or aluminium, or alloys thereof. It may be coated, e.g. with ta-C. Preferably, the bipolar plate has no welding joints, i.e. there is no welding step in the formation of the bipolar plate.

Further provided herein is a method of making a bipolar plate, comprising
(i) providing a sheet of metal or alloy;
(ii) stamping the sheet to form a bipolar plate comprising a plurality of hydrogen channels and a plurality of oxygen channels,
wherein the bipolar plates can be used to make a hydrogen fuel cell unit according to the invention, including according to any of its embodiments and preferred embodiments or combination of features.

The method preferably does not comprise a welding step.

Still further provided by the invention is a method of making a hydrogen fuel cell, comprising
(i) providing a first bipolar plate having a front face and a rear face, the rear face being an anode, and a second bipolar plate having a front face and a rear face, the front face being a cathode and the rear face being an anode,
(ii) locating a first membrane electrode assembly between the first and second bipolar plates,
   wherein when the first membrane electrode assembly is between the first and second bipolar plates (e.g. between the rear side of the first bipolar plate and the front side of the second bipolar plate), a flow path is provided between the rear face of the first bipolar plate and the first membrane electrode assembly for flow of hydrogen, and a flow path is provided between the front face of the second bipolar plate and the first membrane electrode assembly for flow of oxygen,
(iv) providing a third bipolar plate having a front face and a rear face, the front face being a cathode, and
(v) locating a second membrane electrode assembly between the second and third bipolar plates,
wherein when the second membrane electrode assembly is between the second and third bipolar plates (e.g. between the rear side of the second bipolar plate and the front side of the third bipolar plate), a flow path is provided between the rear face of the second bipolar plate and the second membrane electrode assembly for flow of hydrogen, and a flow path is provided between the front face of the third bipolar plate and the second membrane electrode assembly for flow of oxygen.

Preferred methods of making a hydrogen fuel cell comprise one or more or all optional or preferred features of the invention as described elsewhere herein.

In the methods, the bipolar plates are preferably all of the same design, adjacent plates being rotated 180 degrees with respect to each other.

A method of making a hydrogen fuel cell unit comprises
(i) providing a sheet of metal or alloy;
(ii) stamping the sheet to form a bipolar plate comprising a plurality of hydrogen channels and a plurality of oxygen channels,
(iii) repeating steps (i) and (ii) at least once to provide a plurality of like bipolar plates, and
(iv) arranging the plurality of like bipolar plates in a stack, adjacent plates rotated 180 degrees with respect to each other.

A further method of making a hydrogen fuel cell unit comprises
(i) providing a plurality of like bipolar plates, each comprising a plurality of hydrogen channels and a plurality of oxygen channels, and
(ii) arranging the plurality of like bipolar plates in a stack, adjacent plates rotated 180 degrees with respect to each other.

The bipolar plates can thus be used to make a hydrogen fuel cell unit according to the invention, including according to any of its embodiments and preferred embodiments or combination of features as described herein. Exemplary stacks comprise 5 or more, or especially 10 or more like bipolar plates in a stack.

Gaskets are conventional in hydrogen fuel cells and are suitably used in the invention between adjacent plates to prevent leakage between the respective hydrogen and oxygen sides of the fuel cell, provide a seal between the hydrogen flow channels inlets and outlets and a hydrogen manifold, as is conventional in a hydrogen fuel cell, and seal top and bottom plates in a stack to the current collectors. It is optional to include an oxygen manifold, and if indeed present a gasket can be used to seal the oxygen flow channels inlets and outlets to the oxygen manifold.

In preferred embodiments, a first gasket may be used on the cathode side of all bipolar plates (referred to as a cathode gasket) and a second gasket may be used on the anode side of all bipolar plates (referred to as an anode gasket). Preferably, all cathode gaskets are the same (i.e. have the same shape) and all anode gaskets are the same (i.e. have the same shape). In some embodiments a third gasket may be required for the anode current collector and a fourth gasket may be required for the cathode current collector. In other, preferred, embodiments, the first gasket (i.e. that used on the cathode side of all plates) may be used for the cathode current collector and the second gasket (i.e. that used on the anode side of all plates) may be used for the anode current collector. A separate gasket for the end plates may also be required.

The methods thus suitably comprise adding a hydrogen manifold and adding current collectors and locating gaskets between the respective components and clamping the plates, gaskets and other components together.

The single plate bipolar plates of embodiments of the invention do not require welding between adjacent plates. As a result, the oxidation and corrosion seen in previously welded plates is avoided.

The single bipolar plates can be thinner and require less material than hitherto. The overall size and/or weight for hydrogen fuel cell stacks of comparable output to welded stacks can be reduced.

The single bipolar plates can be all of the same design, merely oriented differently from one layer in the stack to the next. The complexity of manufacture of the plates and construction of the stack is reduced. A single stamping tool can be used to make all plates in the stack.

It has been found that the single plates used in embodiments of the invention are easily and reliably sealed to each other using internal gaskets and the MEA.

### Drawings

The invention is illustrated with reference to the accompanying drawings, in which:-
Fig. 1 shows known bipolar plates in a fuel cell stack;
Fig. 2 shows the components of known anode and cathode plates forming a bipolar plate;
Fig. 3 shows a view of a bipolar plate of the invention from above and to the side;
Fig. 4 shows a plan view from above of one side of a bipolar plate of the invention;
Fig. 5 is a view from above showing the channels of two separate bipolar plates of the invention, one stacked directly on top of the other, both plates having the same shape and configuration and one bipolar plate rotated 180 degrees with respect to the other;
Fig. 6 shows a view from above of the bipolar plate of fig. 4 with a proton exchange membrane on top, sealing the anode side of the bipolar plate;
Fig. 7 shows a view from above of the bipolar plate of fig. 4 showing the anode gasket on the plate;
Fig. 8 shows a view from above of the bipolar plate of fig. 4 showing the cathode gasket on the plate;
Fig. 9 shows a view from above and to the side of part of a stack of bipolar plates of the invention enabling view of a cross-section through the stack, showing the air flow channels;
Fig. 10 shows a more detailed cross-section in the same direction as part of Fig. 9 at the centre of a fuel cell stack;
Fig. 11 shows a cross-section through a fuel cell stack, in a direction perpendicular to Fig.s 9 and 10, showing the hydrogen flow channels;
Fig. 12 shows a more detailed cross-section at the edge of a fuel cell stack, the cross-section has been taken in the same direction as Fig. 11;
Fig. 13 shows a plan view from above of an alternative embodiment of the bipolar plates of the invention;
Fig. 14 shows a view from above showing the channels of two separate bipolar plates of the embodiment shown in Figure 13, one stacked directly on top of the other, both plates having the same shape and configuration and one bipolar plate rotated 180 degrees with respect to the other;
Fig.s 15a and 15b show a plan view from above of another embodiment of bipolar plates of the invention;
Fig. 16 shows a plan view from above of another embodiment of a bipolar plate of the invention with a closed cathode, for use with an oxygen manifold;
Fig.s 17a and 17b show a plan view from above of a further embodiment of bipolar plates of the invention with a closed cathode, for use with an oxygen manifold;
Fig. 18 shows a view from above and to the side of a fuel cell comprising a stack of bipolar plates of the invention;
Fig. 19 shows an exploded view of the fuel cell stack of Fig. 18;
Fig. 20 shows a view from above and to the side of a cross-section through the centre of the fuel cell stack of Fig.s 18 and 19, showing flow channels;
Fig. 21 shows a more detailed cross-section in the same direction as Fig. 20, showing a conduit for connection to a hydrogen manifold;
Fig. 22 shows a similar cross-section in the same direction as Fig. 20, but through the perimeter gasket;
Fig. 23 shows a more detailed partial cross-section through the perimeter gasket, in the same direction as Fig.s 20-22;
Fig. 24 shows a view from above and to the side of a cross-section through the centre of the fuel cell stack of Fig. 18, in a direction perpendicular to Fig.s 20-23, showing the hydrogen flow channels;
Fig. 25 shows a more detailed cross-section in a similar direction to Fig. 24, though from the side, showing the hydrogen flow channels and perimeter gasket;
Fig. 26 shows a similar cross-section in the same direction as Fig. 24, but through the additional section of cathode gasket;
Fig. 27 shows a more detailed partial cross-section through the additional section of cathode gasket, in a similar direction to Fig 26, though from the side;
Fig. 28 shows a view from above and to the side of a further alternative embodiment of the bipolar plates of the invention;
Fig. 29 shows a plan view from above of the bipolar plate of fig. 28;
Fig. 30 shows a plan view from above of the anode side of the bipolar plate of fig. 28, showing the anode gasket;
Fig. 31 shows a plan view from above of the cathode side of the bipolar plate of fig. 28, showing the cathode gasket;
Fig.s 32a, 32b and 32c respectively show views from above and to the side of the anode gasket, cathode gasket and endplate gasket of the embodiment of the invention shown in fig.s 28-31;
Fig. 33 shows a cross-section through the anode gasket features (along line A in fig. 29) of the bipolar of fig. 28;
Fig. 34 shows a view from the edge of a stack of bipolar plates (parallel to line A in fig. 29) according to fig.28;
Fig. 35 shows a cross-section through the hydrogen inlet channels (along line B in fig. 29) of the bipolar plate of fig.28;
Fig. 36 shows a cross-section through the centre (along line C in fig. 29) of the bipolar plate of fig. 28; and
Fig.s 37 to 40 are colour versions of fig.s 33 to 36, and are otherwise equivalent to each other.

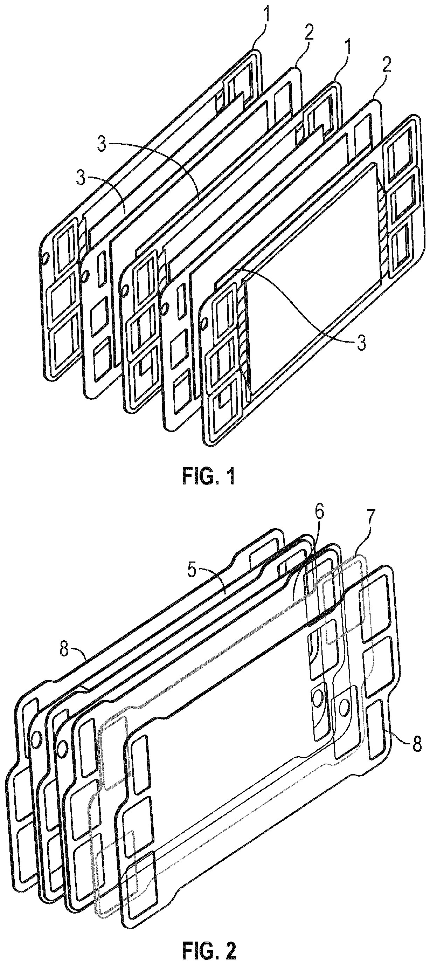

Referring to Figures 1 and 2, for reference a known bipolar plate assembly comprises alternating bipolar plates 1 and membrane electrode assemblies (MEAs) 2 spaced by gas diffusion layers 3. Each known bipolar plate 1 comprises in fact an anode sheet 5 of a first cell, a cathode sheet 6 of an adjacent cell and a welding seam 7 - to form the bipolar plate. The anode sheet 5 and cathode sheet 6 are hence welded together to form the bipolar plate, on either side of which is gasket 8.

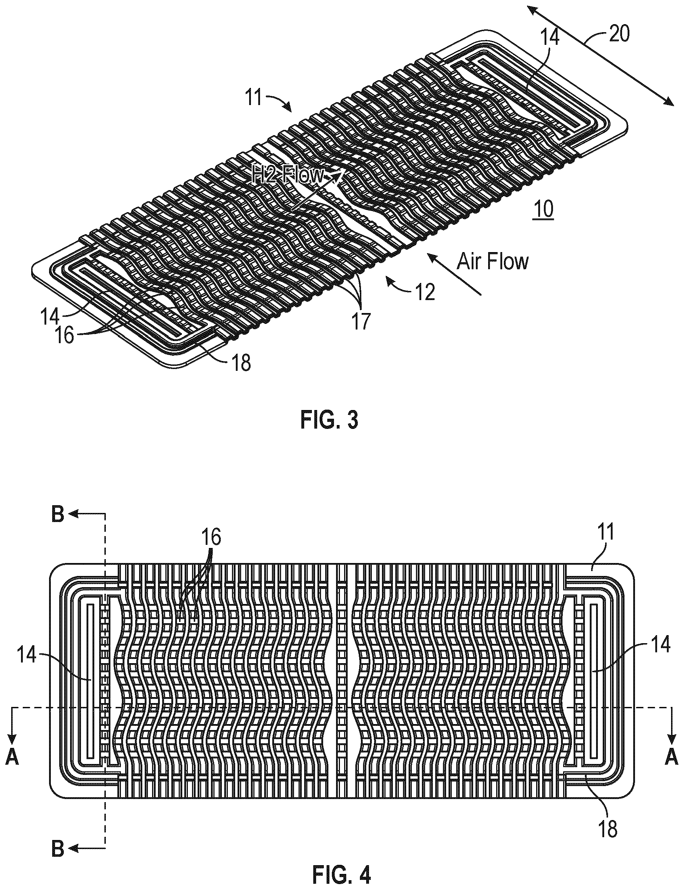

Referring to Figures 3 and 4, a bipolar plate 10 of the invention is formed as a single, stamped steel plate having two sides, one forming and used as an anode side 11 and the other forming and used as a cathode side 12 in the middle a fuel cell stack; plates at respective top and bottom of the stack are either anode or cathode. A bipolar plate of the invention further has a through aperture 14 at each end, for sealed connection in a stack of plates to a hydrogen manifold (not shown here, shown in figures below) at the top and bottom of the stack of plates. The apertures enable H₂ to flow from an inlet manifold (not shown) along and across the anode side of the plates in the stack, via H₂ channels 16 to an outlet manifold (not shown). Hydrogen flows lengthways across the plates and is prevented from escaping by a gasket (not shown here, shown in figures below) between adjacent plates held in gasket channel 18, and a proton exchange membrane (not shown). Hydrogen is prevented from flowing out of the H₂ manifold aperture 14 on the cathode side of the bipolar plate by an additional section of gasket (not shown here, shown in figures below) present only on the cathode side of the bipolar plate. Hence, hydrogen can flow into channels on the anode side but not into channels on the cathode side. A bipolar plate of the invention additionally has air channels 17 on the cathode side 12 of the plate, through which air flows sideways across the width 20 of the plate on the cathode side. Air flow (sideways) is substantially perpendicular (transverse) to hydrogen flow (lengthways). When viewing the plate alone (i.e. without the gasket or membrane present), there are no differences between the anode and cathode sides of the bipolar plate (other than orientation), however Figure 4 has been labelled as the anode side 11 of the bipolar plate.

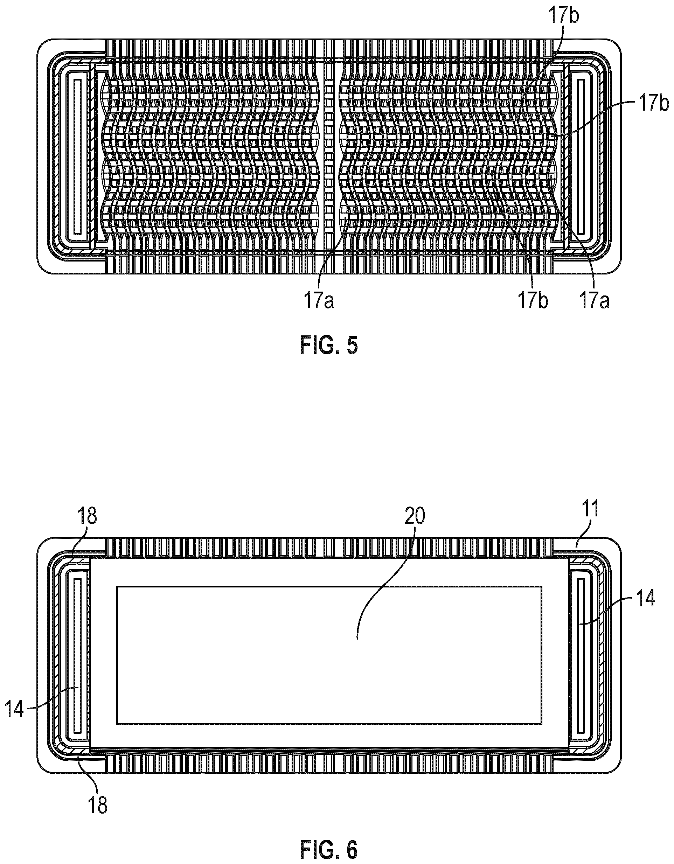

Figure 5 shows two bipolar plates 10 of the invention, one on top of the other, with the top bipolar plate being partially transparent (purely for representative purposes), such that the hydrogen channels (not labelled but see Figure 4 for reference) and air channels 17a,b of the lower plate are visible in the Figure. Orientation of the plates alternates: adjacent bipolar plates in a fuel cell stack are rotated 180 degrees about a line in the centre of the plate, perpendicular to the surface of the plate. The channels are purposively designed such that the air channels 17 of adjacent bipolar plates are not fully aligned, i.e. not along all of their length: in Figure 5 it can be seen that the air channels of the top plate 17a are aligned vertically at their edges, i.e. inlets and outlets, but then criss-cross in opposition directions, their paths repeatedly diverging then converging, so that they are not fully aligned with the air channels of the lower plate 17b. The plate is designed so that air channels of adjacent plates (i.e. of one plate rotated with respect to the next) are intentionally partially not aligned so that channels of adjacent plates do not fit into each other, or 'nest', and to enable the membrane (not shown) to be clamped between adjacent plates, clamped at points where a lower surface of one plate meets an upper surface of the other, without falling into or being urged into the air channels 17, since this would reduce air flow and/or compromise sealing.

The curved shape of the channels is also significant. The air channels are not straight in order to prevent a fuel cell stack from partially compressing / collapsing. Alternate bipolar plates in a fuel cell stack of bipolar plates of the invention are rotated 180°. Therefore, since the air channels are not parallel on adjacent plates, the plates cannot nest into each other. This is important to provide support from one plate to the next and to prevent the air channels and hydrogen channels from being blocked by the channels on adjacent plates pressing into each other. The partially non-parallel channels between adjacent plates also allow the proton exchange membrane and both the anode and cathode gaskets to be clamped securely between adjacent plates in order to prevent H₂ leaking out of the cell and to prevent mixing of H₂ and air within the fuel cell.

Figure 6 shows a membrane 20 on the anode side 11 of a bipolar plate of the invention. The membrane extends across the width of the bipolar plate between the gasket channel 18 (here with gasket present) on either side and across the length of the bipolar plate between the H₂ manifold apertures 14 at each end of the bipolar plate. The membrane allows H₂ to flow out of the H₂ manifold (not shown) lengthways across the plates through the hydrogen channels (not shown) and into the H₂ manifold apertures at the other end of the bipolar plate, without escaping and without leaking into the cathode side of an adjacent bipolar plate.

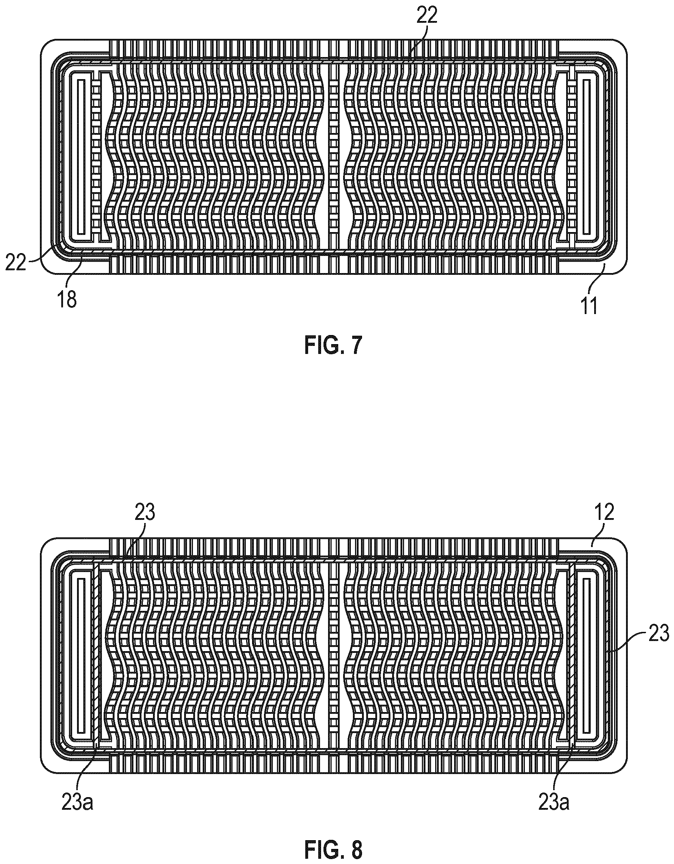

Figures 7 and 8 show the gaskets present on the anode and cathode sides of a bipolar plate of the invention respectively. The anode gasket 22, passes round the outside of the bipolar plate in the gasket channel 18; this prevents H₂ leaking and allows H₂ to flow thorough the H₂ channels. The cathode gasket 23 comprises an additional section 23a which prevents H₂ passing out of the H₂ manifold channels on the cathode side of the bipolar plate.

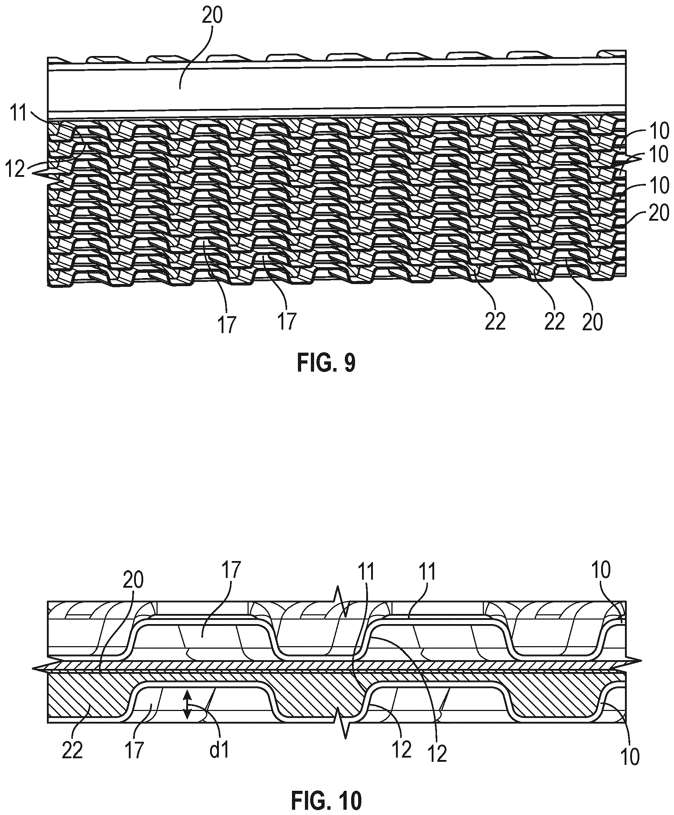

Figures 9 and 10 show a cross-section through a fuel cell stack, taken through line A as shown in Figure 4. A plurality of bipolar plates 10 are seen in the stack, each with the lower side being the cathode side 12 and the upper side being the anode side 11. A membrane 20 is seen on top of the stack and attached to the anode side of each bipolar plate in the fuel cell stack. The anode gasket 22 prevents air flow on the anode side of each plate, whilst the air channels 17 on the cathode side of each plate are open to allow air flow. It is noted elsewhere that the air channels in adjacent bipolar plates of a fuel cell stack are not aligned along the whole of their length, however the cross-section shown is taken at a position where the channels do align for ease of viewing in Figure 9.

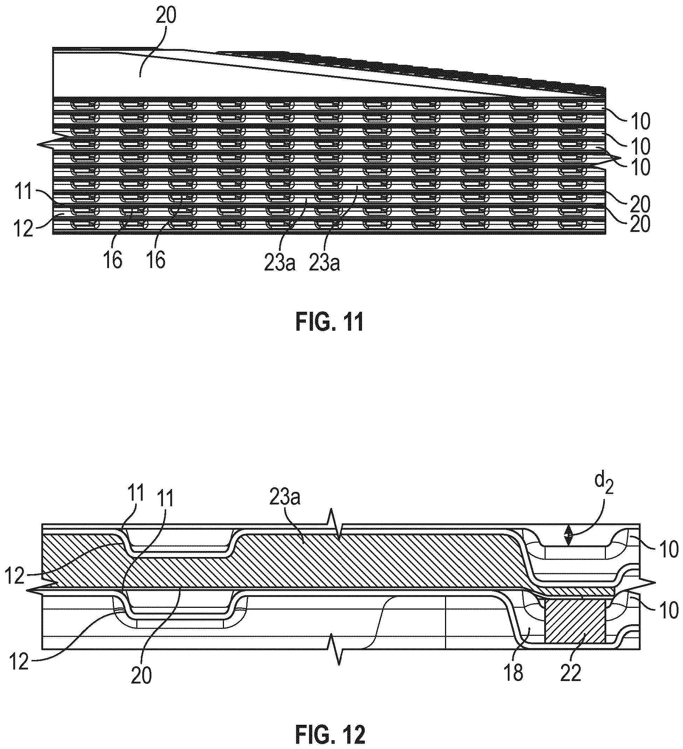

Figures 11 and 12 show a cross-section through a fuel cell stack perpendicular to that in Figure 9, taken through a line B as shown in Figure 4. A number of bipolar plates 10 can be seen in the stack, each with the lower side being the cathode side 12 and the upper side being the anode side 11. A membrane 20 is seen on top of the stack and also attached to the anode side of each bipolar plate in the fuel cell stack. The additional section 23a of the cathode gasket (along which the cross-section was taken) prevents H₂ flowing on the cathode side of each plate, whilst the H₂ channels 16 allow hydrogen to flow on the anode side of each bipolar plate 10 in the stack. Figure 12 additionally shows the anode gasket 22 in the gasket channel 18, to prevent air flow along the anode side 11 of the bipolar plates.

The H₂ channels 16 in Figures 11 and 12 do not extend through the full thickness of each bipolar plate 10. This is to prevent the H₂ channels 16 blocking the perpendicular air channels 17 (shown in Figures 9 and 10). The air channels 17 are stamped into the bipolar plate such that each channel has a depth d₁, the perpendicular H₂ channels are then stamped into the bipolar plates with a depth d₂. The depth d₂ of the H₂ channels is smaller than the depth d₁ of the air channels. At the positions where the air channels and H₂ channels intersect (on opposite sides of the bipolar plate), the air channels have a notch in them and are narrowed to a depth d₁-d₂. This arrangement enables air and hydrogen to flow in cross-wise directions to each other through their respective channels in approximately perpendicular directions on opposite sides of each bipolar plate simultaneously.

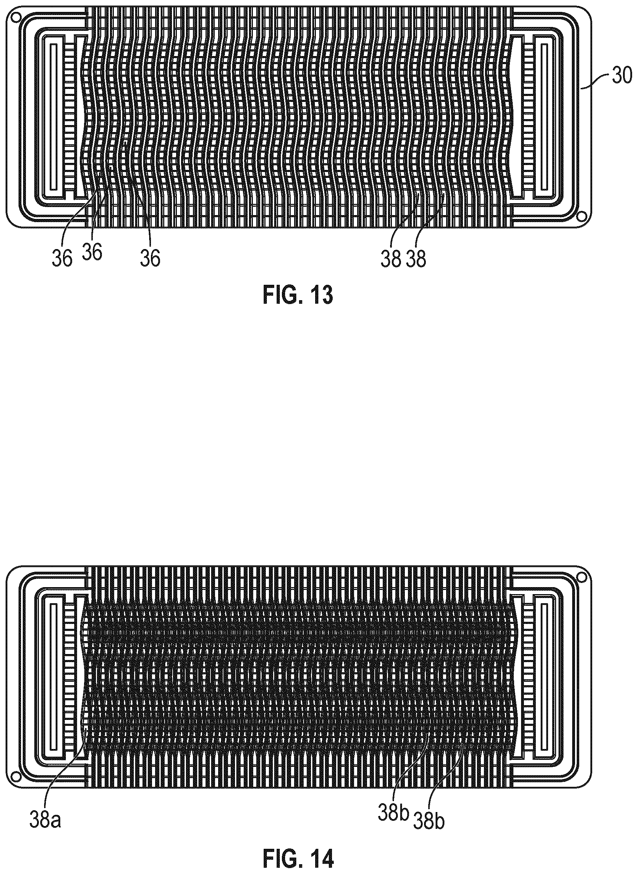

The bipolar plate shown in Figure 13 is an alternative embodiment of the invention. Similarly to the bipolar plate described above in relation to Figures 3-8, the bipolar plate 30 of Figure 13 is stamped and then alternate plates are rotated 180 degrees. This rotation prevents air channels 38 from being aligned, allowing the cathode and anode gaskets (not shown) and proton exchange membrane (not shown) to be secured between adjacent plates. The bipolar plate of Figure 13 differs from the bipolar plate of Figures 3-8 due to the different shape of the stamped air channels. Otherwise, the features of the bipolar plate of Figure 13 are the same as or correspond to those of the bipolar plate of Figures 3-8.

Figure 14 shows two bipolar plates 30 of the invention, one on top of the other. With the top bipolar plate being partially transparent (for representation purposes only), such that the hydrogen channels (not labelled but see labels 36 in Figure 13 for reference) and air channels 38b of the lower plate are visible in the Figure. Orientation of the plates alternates: adjacent bipolar plates in a fuel cell stack are rotated 180 degrees about a line in the centre of the plate, perpendicular to the surface of the plate. The channels are purposely designed such that the air channels 38 of adjacent bipolar plates are not fully aligned: in Figure 14 it can be seen that the air channels of the top plate 38a are aligned vertically at their edges, i.e. inlets and outlets, but then criss-cross in opposition directions, their paths repeatedly diverging then converging, so that they are not fully aligned with the air channels of the lower plate 38b. The plate is designed so that air channels of adjacent plates (i.e. of one plate rotated with respect to the next) are intentionally partially not aligned so that channels of adjacent plates do not fit into each other, or 'nest', and to enable the membrane (not shown) to be clamped between adjacent plates, clamped at points where a lower surface of one plate meets an upper surface of the other, without falling into or being urged into the air channels 38, since this would reduce air flow and/or compromise sealing.

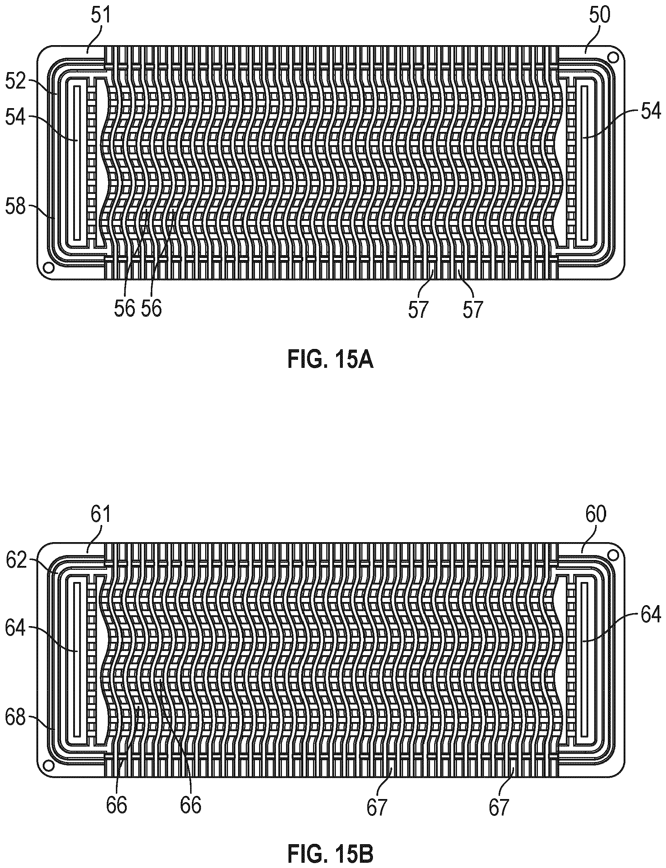

The bipolar plates shown in Figures 15a and 15b are an alternative embodiment of the invention. As discussed above (e.g. in relation to Figure 5 and Figure 13), bipolar plates of the type described in Figures 3-8 and 13 are stamped and then rotated 180 degrees in order to prevent the air channels form being aligned. In the embodiment shown in Figures 15a and 15b, it is not necessary to rotate the bipolar plates when stacking them. A different stamping tool was used to form bipolar plate 50 (shown in Figure 15a) and bipolar plate 60 (shown in Figure 15b). Therefore, when a fuel cell stack is formed by alternating bipolar plates 50 and 60, it is not necessary to rotate any of the plates. Other than the pattern of air channels 57, 67, these bipolar plates have channels that follow the same principles as those shown in Figures 3-8. The upper surface of each bipolar plate is the anode side 51, 61, whilst the lower side is the cathode side (not shown). There is an aperture 54, 64 on either side of each bipolar plate 50, 60, connecting the hydrogen manifold (not shown) to the hydrogen flow channels 56, 66, on the anode side of the plates. Additionally, in each of Figures 15a and 15b, there is a gasket channel 58, 68 in which the anode gasket 52, 62 sits. Adjacent plates do not nest with each other can hold a MEA sealingly between adjacent plates.

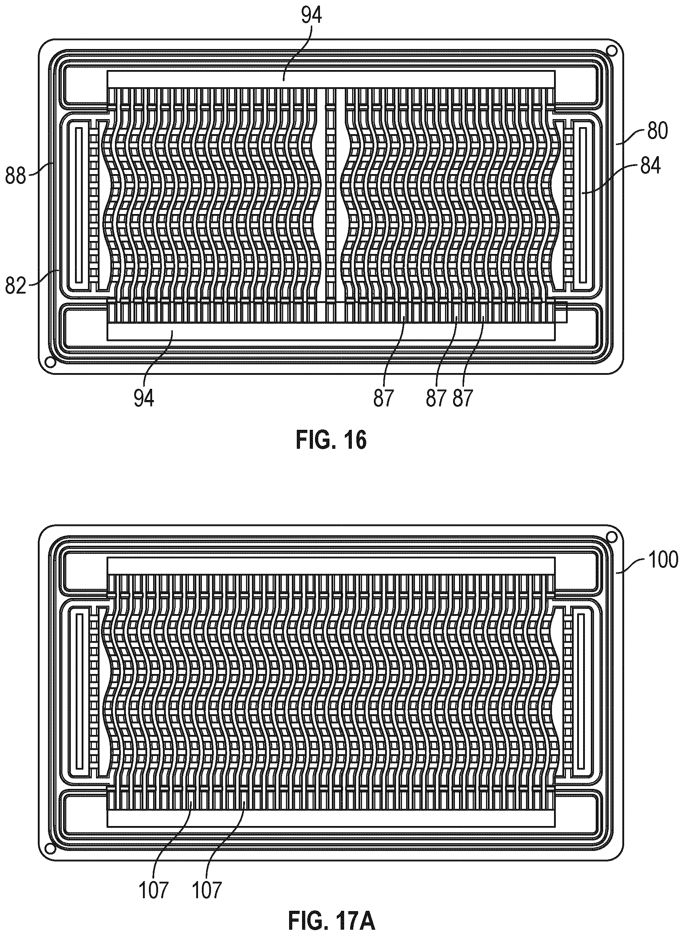

The bipolar plate in Figure 16 is a further alternative embodiment of the invention. The bipolar plate 80 in Figure 16 has a closed cathode, meaning it can be connected to an oxygen manifold. The bipolar plates of the invention shown in Figures 3-8 and 13a-13b both have an open cathode, meaning the air channels are not sealed. In Figure 16, an embodiment is shown with a closed cathode, meaning the air channels 87 are sealed, and air passes into the air channels from an aperture 94 which connects to an air manifold (not shown). The closed cathode arrangement also allows for pure oxygen or air with additional oxygen, to be passed through the air channels 87. As well as the presence of an air aperture 94, the bipolar plate 80 with a closed cathode arrangement additionally has a different shaped gasket channel 88 to complement the different shaped anode gasket 82, and cathode gasket (not shown) required by the closed cathode arrangement. The anode gasket 82 and cathode gasket, have an additional section to seal the air aperture 94.

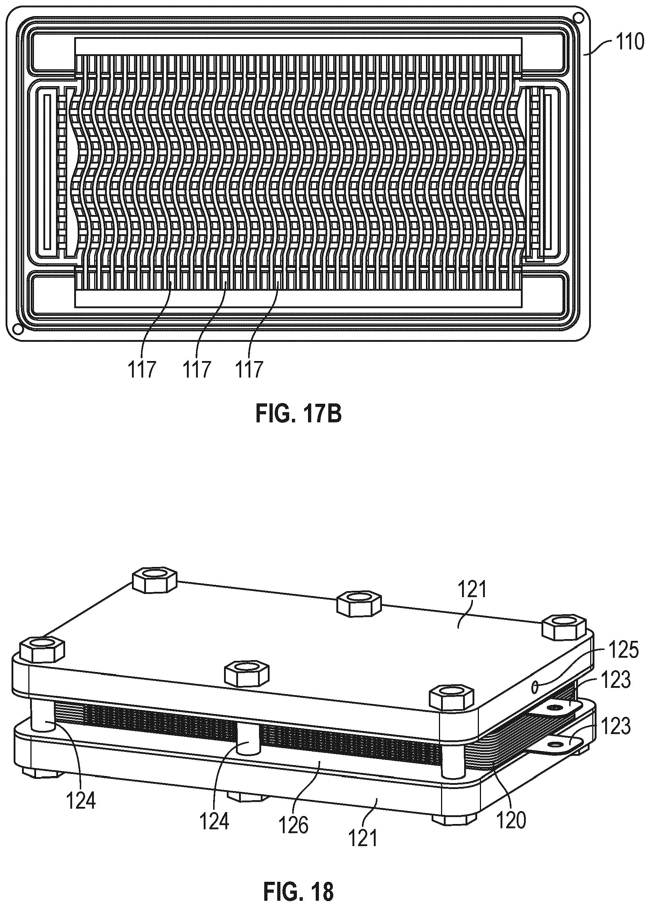

Figures 17a and 17b show an alternative arrangement of a bipolar plate of the invention with a closed cathode. Similarly to bipolar plates 50 and 60 (shown in Figures 15a and 15b), the bipolar plates 100 and 110 (shown in Figures 17a and 17b) do not need to be rotated when stacking. Instead, two separate stamps are used to form two bipolar plates 100 and 110. These bipolar plates are alternated when forming a fuel cell stack and this prevents the air channels 107, 117 on adjacent plates aligning. Other than the shape of the air channels 107, 117, bipolar plates 100 and 110 are identical and have identical features to bipolar plate 80 shown in Figure 16.

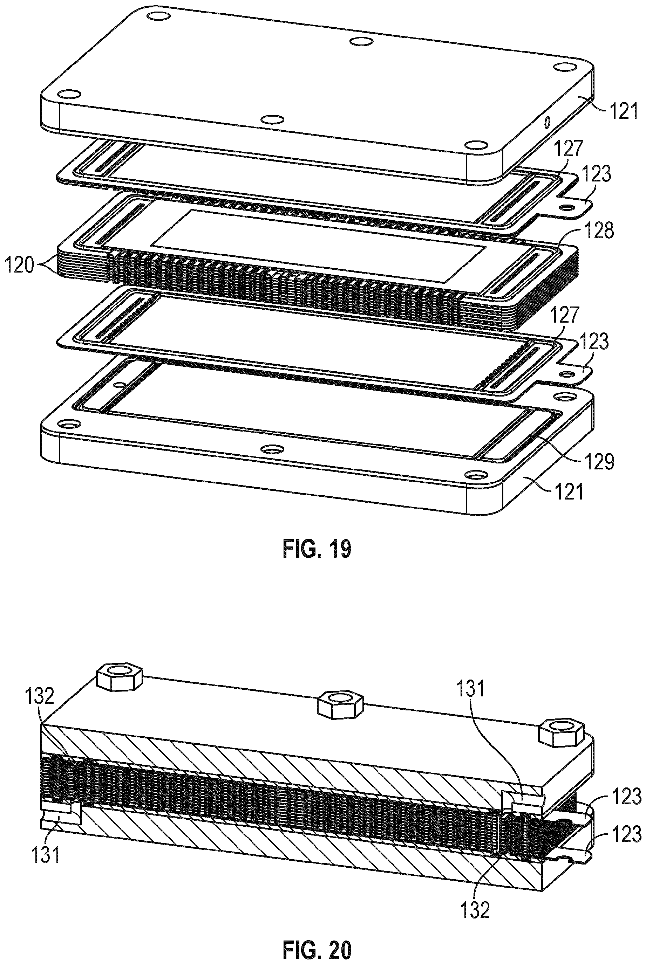

Referring to Figures 18 and 19, a fuel cell stack is shown comprising bipolar plates of the invention. This fuel cell stack features bipolar plates with an open cathode (such as those shown in Figures 3-8, 13 and 15. The fuel cell stack comprises a stack of bipolar plates 120, at either end of the bipolar plate stack is a current collector plate 123 and end plate 121. The fuel cell stack also features a number of different gaskets, in particular an anode gasket 128 and a cathode gasket (not shown) in the bipolar plate stack, current collector gaskets 127, and an end plate gasket 129 at each end. Bolts 124 hold the two end plates 121 together, compressing the stack and ensuring there is a seal between the various gaskets 127, 128 and 129 and bipolar plates / end plates in the stack, preventing gases leaking between the hydrogen and air channels. Hydrogen inlet 125 is shown, through which hydrogen is pumped in controlled manner into the hydrogen manifold and through the apertures (not shown) and hydrogen flow channels (not shown) in each bipolar plate. There is additionally an insulation layer 126 between the collector plate and end plate on each side of the stack.

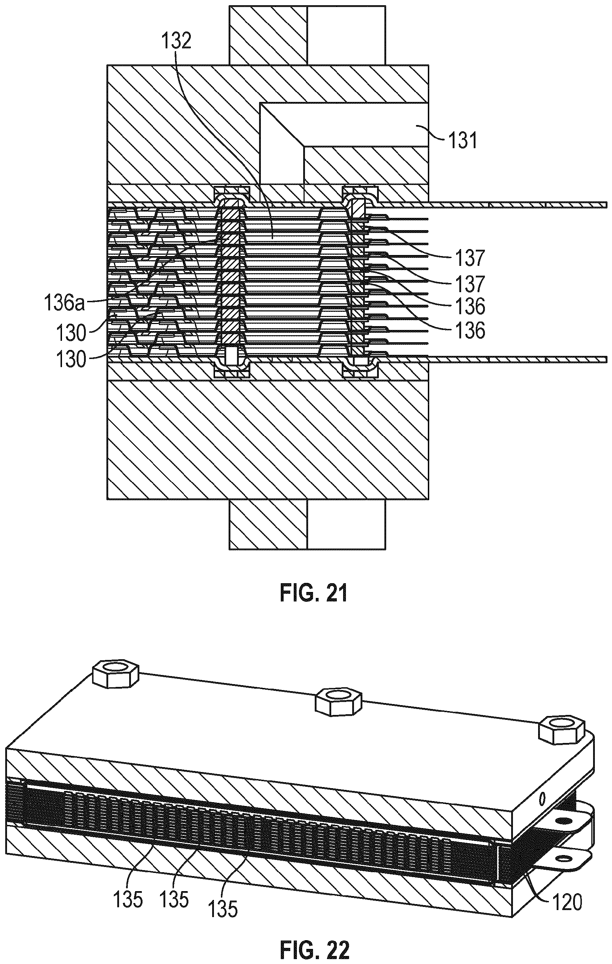

Figures 20 and 21 show a cross-section through the centre of the fuel cell stack of Figures 18 and 19 showing the air channels 130. The cross-section also enables view of the hydrogen manifold 131 and apertures 132 in the bipolar plates 120 through which hydrogen enters and exits the hydrogen channels on the anode sides of bipolar plates of the fuel cell stack. The cathode gasket 136 can be seen preventing hydrogen leaking out of the fuel cell stack and the additional section of cathode gasket 136a can also be seen, preventing hydrogen passing along the cathode side of the bipolar plates in the stack. The anode gasket 137 additionally passes around the outside of the hydrogen apertures 132, preventing hydrogen leaking from the fuel cell stack, whilst allowing hydrogen to pass through the hydrogen channels along the anode side of each bipolar plate.

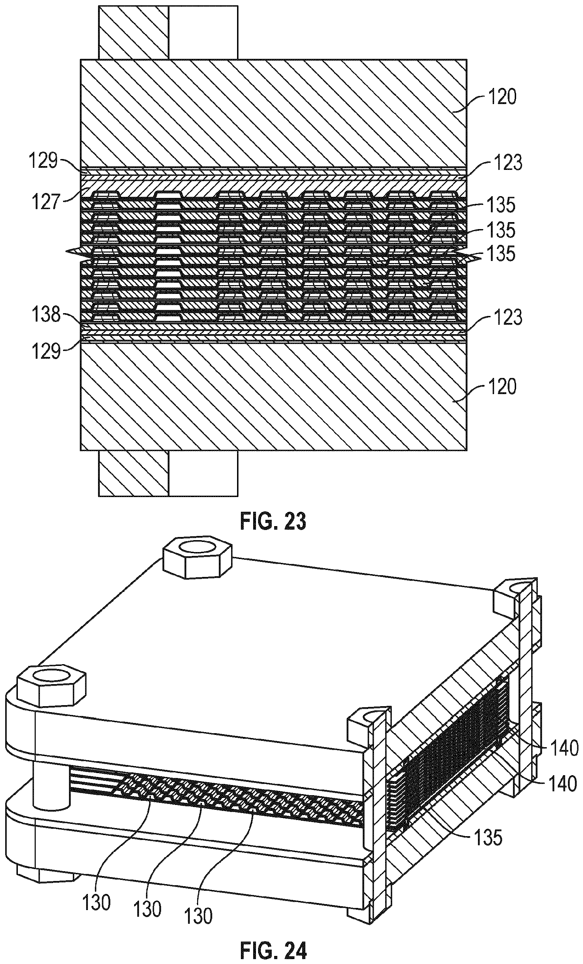

Figures 22 and 23 show a further cross-section through the fuel cell stack in the same direction as that in Figures 20 and 21, however the cross-section passes through the perimeter gasket and not the centre of the fuel cell stack. The anode gasket 135 prevents air entering the anode side of the bipolar plates 120. A membrane and current collector gaskets 127 and 138 are present between the bipolar plate stack and current collector plate 123 on each side of the stack, to prevent hydrogen from leaking out of the bipolar plate stack. There is additionally an end plate gasket 129 between the current collectors 123 and end plates 120 of the fuel cell stack.

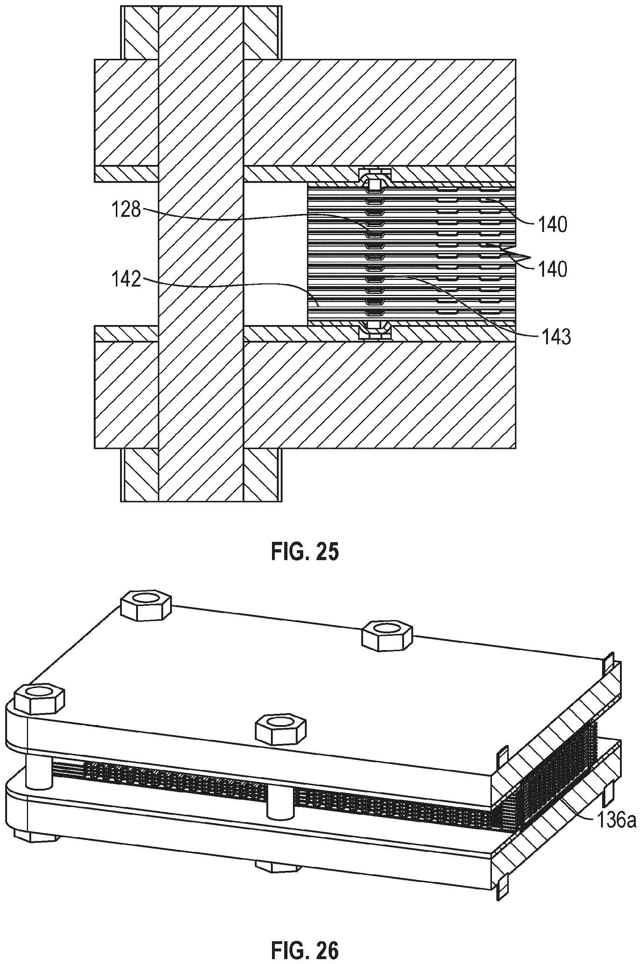

Figures 24 and 25 show a cross-section through the centre of the same fuel cell stack in a direction perpendicular to the cross-sections of Figures 20-23. The hydrogen channels 140 are shown, through which hydrogen passes along the anode side of each bipolar plate in the fuel cell stack. Additionally, the anode gasket 128 can be seen, and prevents air entering the anode side 142 (the upper side in these Figures) of the bipolar plates. The cathode gasket 143 is also seen and prevents hydrogen entering the cathode side (the lower side in these Figures) of the bipolar plates. Additionally, there is a membrane between each bipolar plate, which prevents hydrogen passing from the anode side of one bipolar plate, to the cathode side of an adjacent bipolar plate.

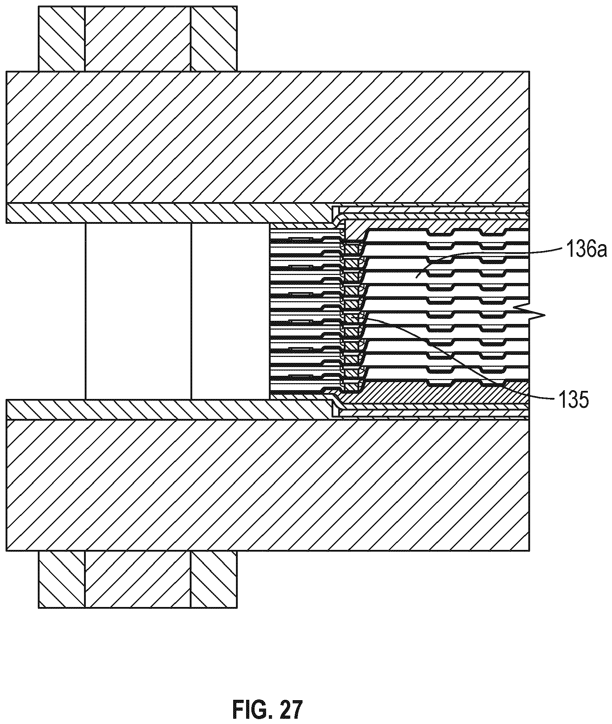

Figures 26 and 27 show a further cross-section through the fuel cell stack in the same direction as Figures 24 and 25, however the cross-section passes through the additional section of cathode gasket 136a adjacent the hydrogen aperture. The additional section of cathode gasket 136a prevents hydrogen entering the cathode side of the bipolar plates. The anode gasket 135 can additionally be seen, and prevents air entering the anode side of the bipolar plates. These gaskets, in combination with the proton exchange membrane between each bipolar plate, are important in ensuring separation between air and hydrogen in the fuel cell stack.

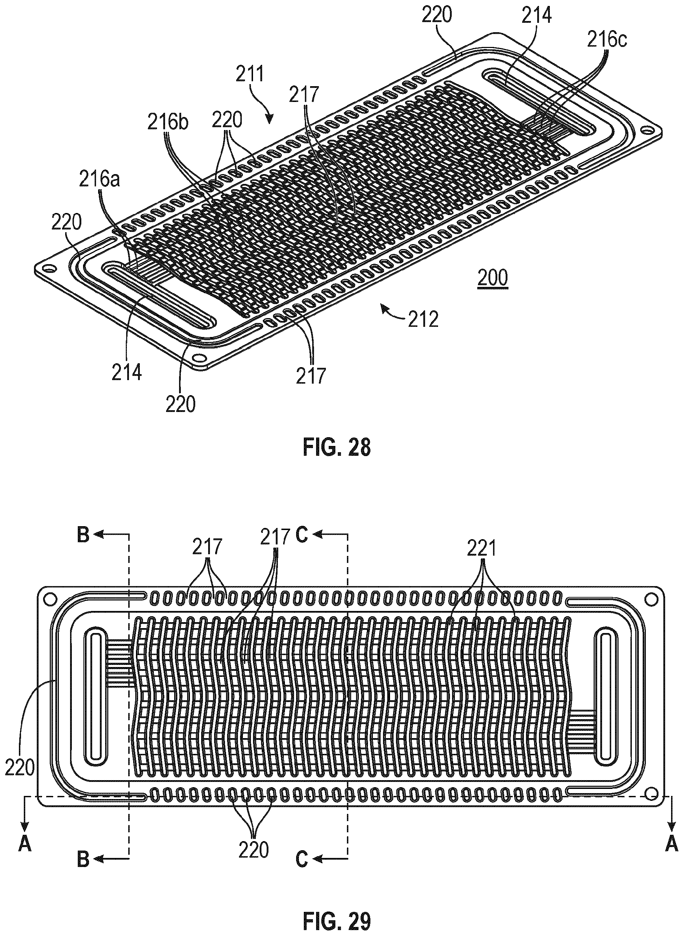

Figures 28 - 40 show an alternative embodiment of the invention. Referring first to Figures 28 and 29, the bipolar plate 200 is formed as a single, stamped plate having two sides, the first side being an anode side 211 and the other being a cathode side 212 in the same way as the embodiments described above. The bipolar plate has an aperture 214 at each end to form a hydrogen manifold when multiple plates are sealingly stacked together. Hydrogen is able to flow from the inlet manifold (not shown) through the hydrogen inlet channels 216a via the main hydrogen channels 216b (e.g. formed as notches in the air channels) and anode valleys 221 (formed as a result of the air channels on the cathode side of the plate), through the hydrogen outlet channels 216c to an outlet manifold (not shown). The hydrogen inlet and outlet channels in this embodiment are positioned to one side of the bipolar plate, these may instead be spread evenly across the width of the apertures 214. Hydrogen is only able to flow on the anode side of the bipolar plate due to the cathode gasket (not shown here, shown in figures below) sealing the hydrogen manifold on the cathode side of the plate.

The bipolar plate of this embodiment additionally has air channels 217, through which air (and therefore oxygen) can flow on the cathode side 212 of the plate in a direction substantially perpendicular to hydrogen flow. Air flow is prevented on the anode side of the bipolar plate by an interaction between the anode gasket features 220 and the anode gasket (not shown here, shown in figures below). The anode gasket features are stamped sections of the bipolar plate that have an elevated profile on the anode side of the bipolar plate. The anode gasket features are not connected to the anode valleys 221. Therefore, when the anode gasket is compressed between the anode gasket features 220 and the MEA (not shown), the anode side is sealed and air flow is prevented on the anode side of the bipolar plate.

When stacked, alternate plates are rotated 180 degrees to prevent stacking of air channels between adjacent plates, allowing the MEA (not shown) to be held between adjacent plates.

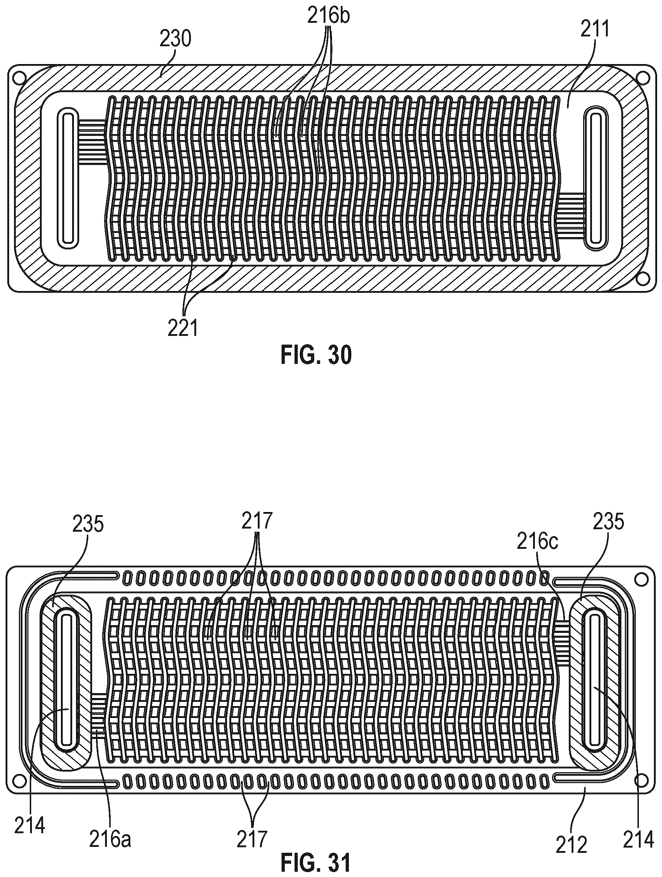

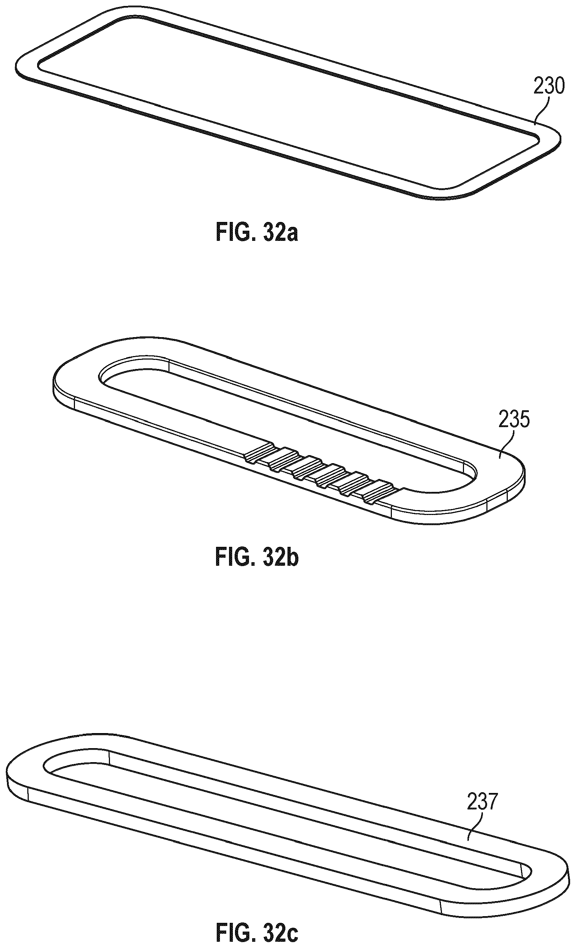

Figures 30 and 31 show the anode gasket and cathode gasket respectively positioned on the anode side and cathode side of a bipolar plate of the invention. These figures should be considered in combination with Figures 32a-c which show, in order, the anode gasket, the cathode gasket and an end plate gasket. As noted above, the anode gasket 230 is sealed between the anode gasket features (not shown here, shown in figures above) on the anode side of the plate 211, and the MEA (not shown). The anode gasket is a loop of continuous thickness.

The cathode gasket 235 is sealed between the cathode side of the plate 212 and the MEA (not shown) to prevent hydrogen flow from the aperture 214 on the cathode side of the plate. The cathode gasket is shaped to complement the hydrogen inlet / outlet channels 216a, 216c. In preferred embodiments, such as that shown here, there is rotational symmetry between the hydrogen inlet channels 216a and hydrogen outlet channels 216c. As such, the same cathode gasket 235 can be used for the apertures 214 at each end of the plate.

The endplate gasket 237 may be present at one or both ends of a fuel cell stack (not shown) to seal the hydrogen manifold (not shown). For example, if the hydrogen manifold inlet and outlet are positioned on the same side of a fuel cell stack, then two endplate gaskets 237 will be required between the current collector plate and end plate on the same side of the fuel cell stack to seal the apertures (not shown). In this example, no end plate gaskets would be required between the current collector plate and end plate on the other side of the fuel cell stack. In alternative embodiments the hydrogen manifold inlet and outlet may be on opposite sides of the fuel cell stack, in which case it can be envisaged that one endplate gasket would be required between the current collector plate and end plate on either side of the fuel cell stack to seal the apertures.

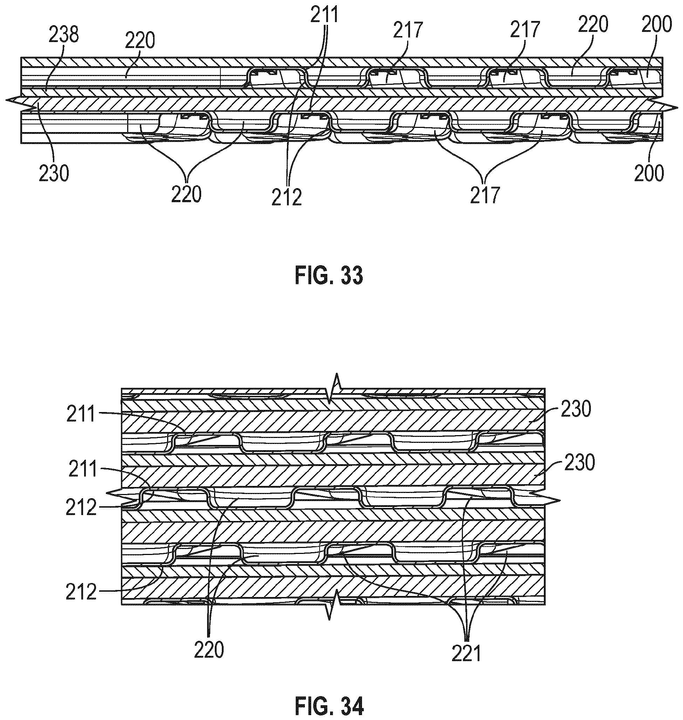

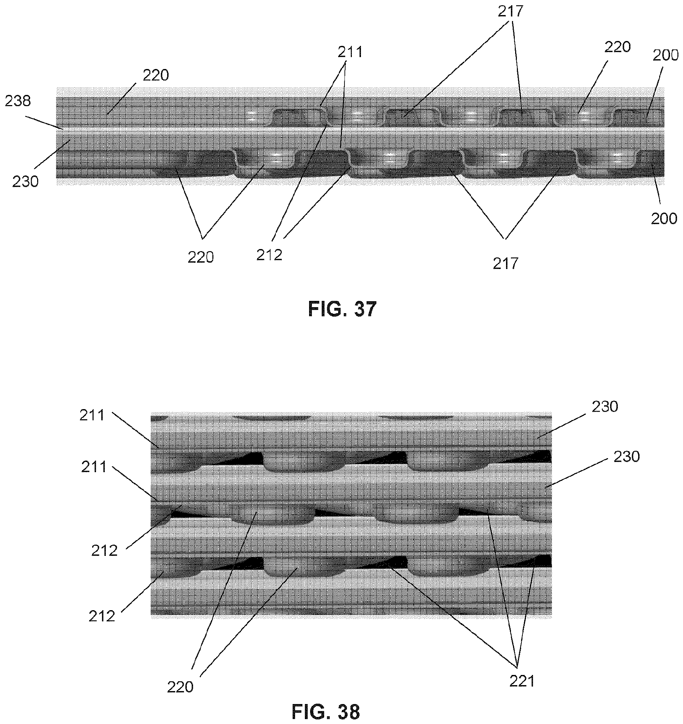

Figure 33 (and corresponding colour figure 37) shows a cross-section through the anode gasket feature of two adjacent bipolar plates 200 (the cross-section is taken through line A in Figure 29). In this figure the upper side of each plate is the anode side 211 and the lower side of each plate is the cathode side 212. Air channels 217 can be seen on the cathode side of each bipolar plate, the air channels are bound by the cathode side of the bipolar plates and the MEA 238. Anode gasket features 220 are present and form a seal between the anode side 211 of each bipolar plate and the anode gasket 230, therefore preventing air entering the anode side of the bipolar plate.

Figure 34 (and corresponding colour figure 38) shows a view of the edge of a fuel cell stack from the same direction as the cross-section of Figure 33, however not intercepting the anode gasket features. It can therefore be seen that the anode gasket features 220 are sealed and not connected to the anode valleys 221, enabling the anode gasket features to contact the anode gasket 230 and seal the anode side 211 (in this figure the upper side of each plate) from air. The air channels 217 are visible on the cathode side 212 (in this figure the lower side of each plate) and allow air containing oxygen to flow on the cathode side of each plate.

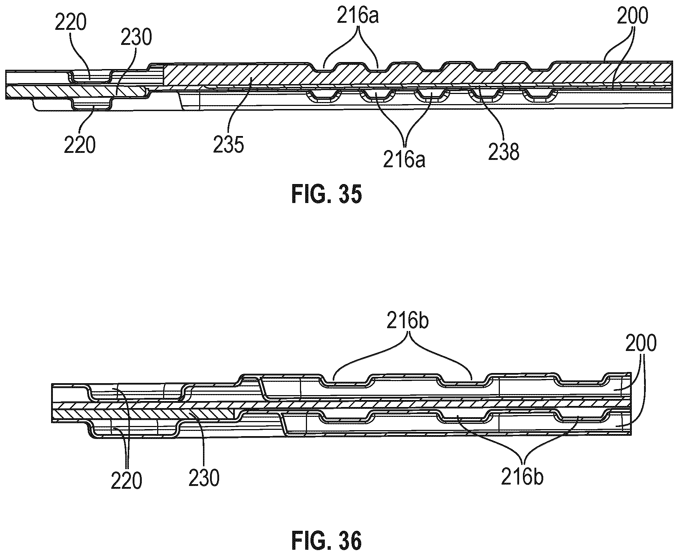

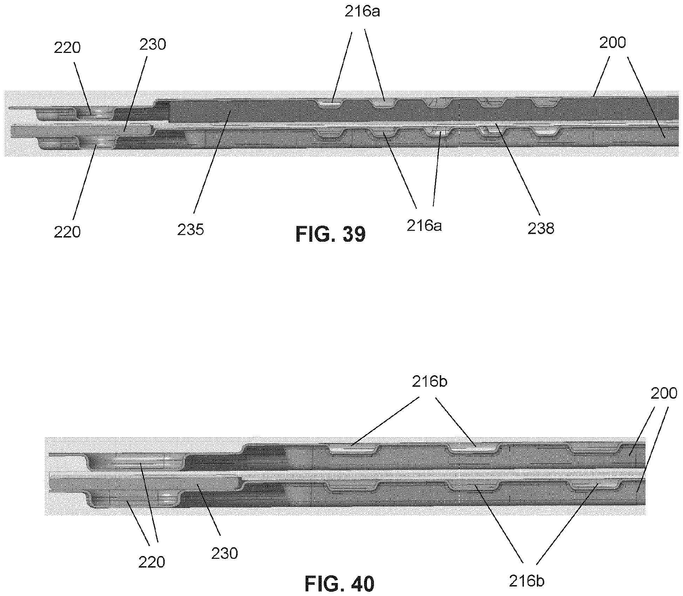

Figure 35 (and corresponding colour figure 39) shows a cross-section through the hydrogen inlet channels of two adjacent bipolar plates 200 (the cross-section is taken through line B in Figure 29). The hydrogen inlet channels 216a are visible on each bipolar plate. The hydrogen inlet channels are formed between the anode side (upper side in this figure) of each bipolar plate and the MEA 238. Hydrogen is prevented from entering the cathode side (lower side in this figure) of each bipolar plate by the cathode gasket 235 which is shaped to correspond with the shape hydrogen inlet channels and is sealed between the cathode side of the plate and the MEA 238. The anode gasket features 220 of each bipolar plate and anode gasket 230 between the two bipolar plates are also visible.

Figure 36 (and corresponding colour figure 40) shows a cross-section through the centre of two bipolar plates 200, along a line C in Figure 29. The hydrogen channels 216b can be seen on the anode side (upper side in this figure) of each bipolar plate. The MEA 238 can be seen positioned between the two bipolar plates. The cross-section intercepts the edge of the bipolar plates and therefore an anode gasket feature 220 is visible on each plate as well as the anode gasket 230.

In use, hydrogen is pumped into the hydrogen manifold and then passes through the aperture on one side of the fuel cell stack, the hydrogen then flows along the anode side of each bipolar plate in the stack through the H₂ channels. At the other side, there is an exit manifold, through which unused hydrogen can be recirculated. Hydrogen is prevented from entering channels on the cathode side of each plate by the cathode gasket. Whilst passing over the anode, H₂ is converted to H⁺ ions (protons) on the catalyst (part of or incorporated in the MEA). The protons then pass across the proton exchange membrane where they combine with oxygen and electrons on the cathode catalyst to produce water. Electrons produced through the conversion of hydrogen to H+ ions pass through an external circuit (not shown) to a current collector, where electricity is collected. A current collector is present at each end of the fuel cell stack.

Air flow can occur passively. Simultaneously to the controlled hydrogen flow, a fan can pump air through the approximately perpendicular air channels on the cathode side of each bipolar plate. Air is prevented from entering the anode side of each plate by the anode gasket. The flow of air supplies oxygen to the cathode, which is converted to O²⁻ ions by combining with electrons on the cathode catalyst (not shown). The water formed from the O²⁻ ions combining with H⁺ ions passes out of the fuel cell as water vapour in the air channels.

Between each bipolar plate in a fuel cell stack of the present invention there is a membrane exchange assembly (MEA). The MEA is conventional in the art and usually comprises, in order, a first gas diffusion layer (GDL), an anode catalyst, a proton exchange membrane, a cathode catalyst and a second gas diffusion layer (GDL). Each of these layers is conventional in the art. In a fuel cell stack of the invention, the first GDL (adjacent the anode catalyst in the MEA) will be adjacent the anode side of a first bipolar plate 10, and the second GDL (adjacent the cathode catalyst of the same MEA) will be adjacent the cathode side of a second bipolar plate. Other arrangements of the MEA are also known and can be used with the bipolar plates of the invention, for example GDL and catalyst layers can be combined into a single layer.

In making the plates and the stacks, a single stamping tool can be used to make multiple plates, and each adjacent plate is rotated 180° with respect to the previous plate, an MEA is positioned between adjacent plates and adjacent plates sealed to each other with gaskets. Alternatively, two different stamping tools can be used and then bipolar plates made with each stamping tool alternated in the stack. Using two different stamping tools prevents the need to rotate adjacent plates. An additional advantage of using two separate stamping tools is that the cathode flow field can be uniform, eliminating unused space at the centre of the bipolar plate, which may be inevitable when a single stamping tool is used. Channels on the faces of the plates form sealed channels for hydrogen and oxygen and the gaskets and the MEA compressed between the plates keep the hydrogen and oxygen channels separated and the hydrogen channels sealed, preventing leakage between the respective channels. The stack of plates is held firmly together by a clamp or outer fuel stack body. Current collectors are added to respective anode and cathode ends of the stack. Sealing of the hydrogen channels forms a single hydrogen inlet at one end of the stack and a single outlet at the other end. A hydrogen manifold is attached to both inlet and outlet and sealed thereto, to enable controlled flow of hydrogen through the hydrogen channels, as is conventional in fuel cells, and which is not part of the invention.

In the embodiment illustrated, oxygen (contained within air) flows freely into and through the oxygen channels (air channels) on the cathode side of the plates while hydrogen access to the anode sides is controlled via the manifold and a gas inlet control system, and the fuel cell operates to generate electricity. As will be appreciated reference to hydrogen channels is reference to channels for flow of gas comprising or consisting of hydrogen and reference to oxygen flow channels refers to channels for flow of gas comprising or consisting of oxygen (especially in air).

In another embodiment, an oxygen manifold (air manifold) is also provided for control of input of oxygen (or air) and exhaust of water. In this alternative embodiment, the oxygen manifold and oxygen channels are both sealed by manifolds and gas flow controlled by valves at respective gas inlets and outlets.

The invention hence provides bipolar plates and hydrogen fuel cell units comprising the plates and methods of making the same.

## Claims

1. A hydrogen fuel cell unit comprising, in order
(i) a first bipolar plate having a front face and a rear face, the rear face being an anode in the unit,
(ii) a first membrane electrode assembly,
(iii) a second bipolar plate having a front face and a rear face, the front face being a cathode in the unit and the rear face being an anode in the unit,
wherein the first membrane electrode assembly is between the first and second bipolar plates, and a flow path is provided between the rear face of the first bipolar plate and the first membrane electrode assembly for flow of hydrogen, and a flow path is provided between the front face of the second bipolar plate and the first membrane electrode assembly for flow of oxygen,
(iv) a second membrane electrode assembly, and
(v) a third bipolar plate having a front face and a rear face, the front face being a cathode in the unit,
wherein the second membrane electrode assembly is between the second and third bipolar plates, and a flow path is provided between the rear face of the second bipolar plate and the second membrane electrode assembly for flow of hydrogen, and a flow path is provided between the front face of the third bipolar plate and the second membrane electrode assembly for flow of oxygen,
wherein the bipolar plates comprise channels for flow of oxygen and wherein the oxygen flow channels of adjacent plates repeatedly diverge and converge across the plate,
wherein the bipolar plates further comprise channels for flow of hydrogen and wherein the hydrogen and oxygen flow channels are substantially transverse to each other, and
wherein the oxygen flow channels are formed by an indentation in the bipolar plate and transverse hydrogen flow channels comprise a notch in the indentation that forms the oxygen flow channels, or vice versa, i.e. wherein hydrogen flow channels are formed by an indentation in the bipolar plate and transverse oxygen flow channels comprise a notch in the indentation that forms the hydrogen flow channels.

2. A hydrogen fuel cell unit according to claim 1, wherein the oxygen flow channels of adjacent plates diverge and converge across the plate in a criss-cross pattern.

3. A hydrogen fuel cell unit according to claim 1 or claim 2, wherein the oxygen flow channels diverge and converge in a regular pattern.

4. A hydrogen fuel cell unit according to any preceding claim, wherein each oxygen flow channel comprises an inlet and an outlet and a conduit between its inlet and its outlet, and wherein the oxygen conduits of adjacent plates in the fuel cell are not vertically aligned along the whole of their length such that the adjacent plates do not nest together when held in a stack that is part of the fuel cell unit.

5. A hydrogen fuel cell unit according to claim 4, wherein the membrane electrode assemblies are clamped in place between the bipolar plates.

6. A hydrogen fuel cell unit according to any preceding claim, wherein the plates comprise channels for flow of hydrogen, each channel having an inlet and an outlet, wherein the respective inlets and outlets of hydrogen flow channels of adjacent plates in the fuel cell are vertically aligned.

7. A hydrogen fuel cell unit according to any preceding claim, wherein the hydrogen flow channels further comprise a conduit between its inlet and outlet, wherein the conduits of channels of adjacent plates in the fuel cell are not vertically aligned along the whole of their length.

8. A hydrogen fuel cell unit according to any preceding claim, wherein the oxygen flow channels each have an inlet and an outlet, wherein the respective inlets and outlets of oxygen flow channels of adjacent plates in the fuel cell are vertically aligned.

9. A hydrogen fuel cell unit according to any preceding claim, wherein with plates stacked vertically on top of each other a horizontal cross-section of any plate passes through both hydrogen and oxygen flow channels.

10. A hydrogen fuel cell unit according to any preceding claim, wherein the first and/or second and/or third bipolar plates do not have rotational symmetry about a line through the centre of the plate in the vertical direction of plate stacking.

11. A hydrogen fuel cell unit according to claim 10, wherein the first and/or second and/or third bipolar plate comprises two or more manifold apertures and there is rotational symmetry of the manifold apertures on each plate.

12. A hydrogen fuel cell unit according to any preceding claim, wherein each of the first, second and third bipolar plates are the same design.

13. A hydrogen fuel cell unit according to claim 12, wherein adjacent bipolar plates are rotated 180 degrees with respect to each other.

14. A bipolar plate according to any preceding claim, stamped from a single sheet of metal or alloy, e.g. steel.

15. A method of making a bipolar plate, comprising
(i) providing a sheet of metal or alloy;
(ii) stamping the sheet to form a bipolar plate comprising a plurality of hydrogen flow channels and a plurality of oxygen flow channels,
wherein the bipolar plates can be used to make a hydrogen fuel cell unit according to any of claims 1 to 13.

16. A method of making a hydrogen fuel cell, comprising
(i) providing a first bipolar plate having a front face and a rear face, the rear face being an anode, and a second bipolar plate having a front face and a rear face, the front face being a cathode and the rear face being an anode,
(ii) locating a first membrane electrode assembly between the first and second bipolar plates,
wherein when the first membrane electrode assembly is between the first and second bipolar plates a flow path is provided between the rear face of the first bipolar plate and the first membrane electrode assembly for flow of hydrogen, and a flow path is provided between the front face of the second bipolar plate and the first membrane electrode assembly for flow of oxygen,
(iii) providing a third bipolar plate having a front face and a rear face, the front face being a cathode, and
(iv) locating a second membrane electrode assembly between the second and third bipolar plates,
wherein when the second membrane electrode assembly is between the second and third bipolar plates:
a flow path is provided between the rear face of the second bipolar plate and the second membrane electrode assembly for flow of hydrogen,
a flow path is provided between the front face of the third bipolar plate and the second membrane electrode assembly for flow of oxygen, and
the flow path for flow of hydrogen and the flow path for flow of oxygen are substantially transverse to each other,
wherein the bipolar plates comprise channels for flow of hydrogen and channels for flow of oxygen and wherein the hydrogen and oxygen flow channels are substantially transverse to each other, and
wherein the oxygen flow channels are formed by an indentation in the bipolar plate and transverse hydrogen flow channels comprise a notch in the indentation that forms the oxygen flow channels, or vice versa, i.e. wherein hydrogen flow channels are formed by an indentation in the bipolar plate and transverse oxygen flow channels comprise a notch in the indentation that forms the hydrogen flow channels.

17. A method according to claim 16, wherein the bipolar plates are all of the same design, adjacent plates being rotated 180 degrees with respect to each other.

## Patentansprüche

1. Wasserstoff-Brennstoffzelleneinheit, umfassend, der Reihe nach
(i) eine erste bipolare Platte, die eine Vorderfläche und eine Rückfläche aufweist, wobei die Rückfläche eine Anode in der Einheit ist,
(ii) eine erste Membranelektrodenanordnung,
(iii) eine zweite bipolare Platte, die eine Vorderfläche und eine Rückfläche aufweist, wobei die Vorderfläche eine Kathode in der Einheit ist und die Rückfläche eine Anode in der Einheit ist,
wobei sich die erste Membranelektrodenanordnung zwischen der ersten und zweiten bipolaren Platte befindet und ein Strömungsweg zwischen der Rückfläche der ersten bipolaren Platte und der ersten Membranelektrodenanordnung für die Strömung von Wasserstoff vorgesehen ist und ein Strömungsweg zwischen der Vorderfläche der zweiten bipolaren Platte und der ersten Membranelektrodenanordnung für die Strömung von Sauerstoff vorgesehen ist,
(iv) eine zweite Membranelektrodenanordnung und
(v) eine dritte bipolare Platte, die eine Vorderfläche und eine Rückfläche aufweist, wobei die Vorderfläche eine Kathode in der Einheit ist,
wobei sich die zweite Membranelektrodenanordnung zwischen der zweiten und dritten bipolaren Platte befindet und ein Strömungsweg zwischen der Rückfläche der zweiten bipolaren Platte und der zweiten Membranelektrodenanordnung für die Strömung von Wasserstoff vorgesehen ist und ein Strömungsweg zwischen der Vorderfläche der dritten bipolaren Platte und der zweiten Membranelektrodenanordnung für die Strömung von Sauerstoff vorgesehen ist,
wobei die bipolaren Platten Kanäle für die Strömung von Sauerstoff umfassen und wobei die Sauerstoffströmungskanäle benachbarter Platten über die Platte hinweg wiederholt divergieren und zusammenlaufen,
wobei die bipolaren Platten ferner Kanäle für die Strömung von Wasserstoff umfassen und wobei die Wasserstoff- und Sauerstoffströmungskanäle im Wesentlichen quer zueinander sind und
wobei die Sauerstoffströmungskanäle durch eine Vertiefung in der bipolaren Platte gebildet sind und quer verlaufende Wasserstoffströmungskanäle eine Kerbe in der Vertiefung umfassen, die die Sauerstoffströmungskanäle bildet, oder umgekehrt, d. h. wobei Wasserstoffströmungskanäle durch eine Vertiefung in der bipolaren Platte gebildet sind und quer verlaufende Sauerstoffströmungskanäle eine Kerbe in der Vertiefung umfassen, die die Wasserstoffströmungskanäle bildet.

2. Wasserstoff-Brennstoffzelleneinheit nach Anspruch 1, wobei die Sauerstoffströmungskanäle benachbarter Platten über die Platte hinweg in einem Kreuz- und Quermuster divergieren und zusammenlaufen.

3. Wasserstoff-Brennstoffzelleneinheit nach Anspruch 1 oder Anspruch 2, wobei die Sauerstoffströmungskanäle in einem regelmäßigen Muster divergieren und zusammenlaufen.

4. Wasserstoff-Brennstoffzelleneinheit nach einem vorhergehenden Anspruch, wobei jeder Sauerstoffströmungskanal einen Einlass und einen Auslass und eine Leitung zwischen seinem Einlass und seinem Auslass umfasst und wobei die Sauerstoffleitungen benachbarter Platten in der Brennstoffzelle nicht über ihre gesamte Länge vertikal ausgerichtet sind, sodass die benachbarten Platten nicht ineinander verschachtelt sind, wenn in einem Stapel gehalten, der Bestandteil der Brennstoffzelleneinheit ist.

5. Wasserstoff-Brennstoffzelleneinheit nach Anspruch 4, wobei die Membranelektrodenanordnungen zwischen den bipolaren Platten festgeklemmt sind.

6. Wasserstoff-Brennstoffzelleneinheit nach einem vorhergehenden Anspruch, wobei die Platten Kanäle für die Strömung von Wasserstoff umfassen, wobei jeder Kanal einen Einlass und einen Auslass aufweist, wobei die jeweiligen Einlässe und Auslässe der Wasserstoffströmungskanäle benachbarter Platten in der Brennstoffzelle vertikal ausgerichtet sind.

7. Wasserstoff-Brennstoffzelleneinheit nach einem vorhergehenden Anspruch, wobei die Wasserstoffströmungskanäle ferner eine Leitung zwischen ihrem Einlass und ihrem Auslass umfassen, wobei die Leitungen der Kanäle benachbarter Platten in der Brennstoffzelle nicht über ihre gesamte Länge vertikal ausgerichtet sind.

8. Wasserstoff-Brennstoffzelleneinheit nach einem vorhergehenden Anspruch, wobei die Sauerstoffströmungskanäle jeweils einen Einlass und einen Auslass aufweisen, wobei die jeweiligen Einlässe und Auslässe der Sauerstoffströmungskanäle benachbarter Platten in der Brennstoffzelle vertikal ausgerichtet sind.

9. Wasserstoff-Brennstoffzelleneinheit nach einem vorhergehenden Anspruch, wobei bei vertikal übereinander gestapelten Platten ein horizontaler Querschnitt einer beliebigen Platte sowohl durch Wasserstoff- als auch Sauerstoffströmungskanäle verläuft.

10. Wasserstoff-Brennstoffzelleneinheit nach einem vorhergehenden Anspruch, wobei die erste und/oder zweite und/oder dritte bipolare Platte keine Rotationssymmetrie um eine Linie durch die Mitte der Platte in der vertikalen Richtung der Plattenstapelung aufweist/aufweisen.

11. Wasserstoff-Brennstoffzelleneinheit nach Anspruch 10, wobei die erste und/oder zweite und/oder dritte bipolare Platte zwei oder mehr Verteileröffnungen umfasst/umfassen und die Verteileröffnungen auf jeder Platte rotationssymmetrisch sind.

12. Wasserstoff-Brennstoffzelleneinheit nach einem vorhergehenden Anspruch, wobei jede der ersten, zweiten und dritten bipolaren Platte baugleich ist.

13. Wasserstoff-Brennstoffzelleneinheit nach Anspruch 12, wobei benachbarte bipolare Platten um 180 Grad zueinander gedreht sind.

14. Bipolare Platte nach einem vorhergehenden Anspruch, gestanzt aus einem einzigen Blech aus Metall oder Legierung, z. B. Stahl.

15. Verfahren zur Herstellung einer bipolaren Platte, umfassend
(i) Bereitstellen eines Blechs aus Metall oder Legierung;
(ii) Stanzen des Blechs zum Bilden einer bipolaren Platte, die eine Vielzahl von Wasserstoffströmungskanälen und eine Vielzahl von Sauerstoffströmungskanälen umfasst,
wobei die bipolaren Platten zur Herstellung einer Wasserstoff-Brennstoffzelleneinheit nach einem der Ansprüche 1 bis 13 verwendet werden können.

16. Verfahren zur Herstellung einer WasserstoffBrennstoffzelle, umfassend
(i) Bereitstellen einer ersten bipolaren Platte, die eine Vorderfläche und eine Rückfläche aufweist, wobei die Rückfläche eine Anode ist, und einer zweiten bipolaren Platte, die eine Vorderfläche und eine Rückfläche aufweist, wobei die Vorderfläche eine Kathode ist und die Rückfläche eine Anode ist,
(ii) Positionieren einer ersten Membranelektrodenanordnung zwischen der ersten und zweiten bipolaren Platte,
wobei, wenn sich die erste Membranelektrodenanordnung zwischen der ersten und zweiten bipolaren Platte befindet, ein Strömungsweg zwischen der Rückfläche der ersten bipolaren Platte und der ersten Membranelektrodenanordnung für die Strömung von Wasserstoff vorgesehen ist und ein Strömungsweg zwischen der Vorderfläche der zweiten bipolaren Platte und der ersten Membranelektrodenanordnung für die Strömung von Sauerstoff vorgesehen ist,
(iii) Bereitstellen einer dritten bipolaren Platte, die eine Vorderfläche und eine Rückfläche aufweist, wobei die Vorderfläche eine Kathode ist, und
(iv) Positionieren einer zweiten Membranelektrodenanordnung zwischen der zweiten und dritten bipolaren Platte,
wobei, wenn sich die zweite Membranelektrodenanordnung zwischen der zweiten und dritten bipolaren Platte befindet:
ein Strömungsweg zwischen der Rückfläche der zweiten bipolaren Platte und der zweiten Membranelektrodenanordnung für die Strömung von Wasserstoff vorgesehen ist,
ein Strömungsweg zwischen der Vorderfläche der dritten bipolaren Platte und der zweiten Membranelektrodenanordnung für die Strömung von Sauerstoff vorgesehen ist, und
der Strömungsweg für die Strömung von Wasserstoff und der Strömungsweg für die Strömung von Sauerstoff im Wesentlichen quer zueinander sind,
wobei die bipolaren Platten Kanäle für die Strömung von Wasserstoff und Kanäle für die Strömung von Sauerstoff umfassen und wobei die Wasserstoff- und Sauerstoffströmungskanäle im Wesentlichen quer zueinander sind, und
wobei die Sauerstoffströmungskanäle durch eine Vertiefung in der bipolaren Platte gebildet sind und quer verlaufende Wasserstoffströmungskanäle eine Kerbe in der Vertiefung umfassen, die die Sauerstoffströmungskanäle bildet, oder umgekehrt, d. h. wobei Wasserstoffströmungskanäle durch eine Vertiefung in der bipolaren Platte gebildet sind und quer verlaufende Sauerstoffströmungskanäle eine Kerbe in der Vertiefung umfassen, die die Wasserstoffströmungskanäle bildet.

17. Verfahren nach Anspruch 16, wobei die bipolaren Platten alle baugleich sind, wobei benachbarte Platten um 180 Grad zueinander gedreht sind.

## Revendications

1. Unité de pile à combustible à hydrogène comprenant, dans l'ordre
(i) une première plaque bipolaire comportant une face avant et une face arrière, la face arrière étant une anode dans l'unité,
(ii) un premier ensemble membrane-électrode,
(iii) une deuxième plaque bipolaire comportant une face avant et une face arrière, la face avant étant une cathode dans l'unité et la face arrière étant une anode dans l'unité,
ledit premier ensemble membrane-électrode se trouvant entre les première et deuxième plaques bipolaires, et un trajet de flux étant situé entre la face arrière de la première plaque bipolaire et le premier ensemble membrane-électrode pour le flux d'hydrogène, et un trajet de flux étant situé entre la face avant de la deuxième plaque bipolaire et le premier ensemble membrane-électrode pour le flux d'oxygène,
(iv) un second ensemble membrane-électrode, et
(v) une troisième plaque bipolaire comportant une face avant et une face arrière, la face avant étant une cathode dans l'unité,
ledit second ensemble membrane-électrode se trouvant entre les deuxième et troisième plaques bipolaires, et un trajet de flux étant situé entre la face arrière de la deuxième plaque bipolaire et le second ensemble membrane-électrode pour le flux d'hydrogène, et un trajet de flux étant situé entre la face avant de la troisième plaque bipolaire et le second ensemble membrane-électrode pour le flux d'oxygène,
lesdites plaques bipolaires comprenant des canaux pour le flux d'oxygène et lesdits canaux de flux d'oxygène des plaques adjacentes divergeant et convergeant de manière répétée à travers la plaque,
lesdites plaques bipolaires comprenant en outre des canaux pour le flux d'hydrogène et lesdits canaux de flux d'hydrogène et d'oxygène étant sensiblement transversaux les uns par rapport aux autres, et
lesdits canaux de flux d'oxygène étant formés par une indentation dans la plaque bipolaire et lesdits canaux de flux d'hydrogène transversaux comprenant une encoche dans l'indentation qui forme les canaux de flux d'oxygène, ou vice versa, c'est-à-dire lesdits canaux de flux d'hydrogène étant formés par une indentation dans la plaque bipolaire et lesdits canaux de flux d'oxygène transversaux comprenant une encoche dans l'indentation qui forme les canaux de flux d'hydrogène.

2. Unité de pile à combustible à hydrogène selon la revendication 1, lesdits canaux de flux d'oxygène des plaques adjacentes divergeant et convergeant à travers la plaque selon un motif entrecroisé.

3. Unité de pile à combustible à hydrogène selon la revendication 1 ou la revendication 2, lesdits canaux de flux d'oxygène divergeant et convergeant selon un motif régulier.

4. Unité de pile à combustible à hydrogène selon l'une quelconque des revendications précédentes, chaque canal de flux d'oxygène comprenant une entrée et une sortie et un conduit entre son entrée et sa sortie, et lesdits conduits d'oxygène des plaques adjacentes dans la pile à combustible n'étant pas alignés verticalement le long de l'intégralité de leur longueur de sorte que les plaques adjacentes ne s'emboîtent pas ensemble lorsqu'elles sont maintenues dans un empilement qui fait partie de l'unité de pile à combustible.

5. Unité de pile à combustible à hydrogène selon la revendication 4, lesdits ensembles membrane-électrodes étant serrés en place entre les plaques bipolaires.

6. Unité de pile à combustible à hydrogène selon l'une quelconque des revendications précédentes, lesdites plaques comprenant des canaux pour le flux d'hydrogène, chaque canal comportant une entrée et une sortie, lesdites entrées et sorties respectives des canaux de flux d'hydrogène des plaques adjacentes dans la pile à combustible étant alignées verticalement.

7. Unité de pile à combustible à hydrogène selon l'une quelconque des revendications précédentes, lesdits canaux de flux d'hydrogène comprenant en outre un conduit entre son entrée et sa sortie, lesdits conduits des canaux des plaques adjacentes dans la pile à combustible n'étant pas alignés verticalement le long de l'intégralité de leur longueur.

8. Unité de pile à combustible à hydrogène selon l'une quelconque des revendications précédentes, lesdits canaux de flux d'oxygène comportant chacun une entrée et une sortie, lesdites entrées et sorties respectives des canaux de flux d'oxygène des plaques adjacentes dans la pile à combustible étant alignées verticalement.

9. Unité de pile à combustible à hydrogène selon l'une quelconque des revendications précédentes, avec des plaques empilées verticalement les unes sur les autres, une section transversale horizontale de n'importe quelle plaque passant à travers à la fois les canaux de flux d'hydrogène et d'oxygène.

10. Unité de pile à combustible à hydrogène selon l'une quelconque des revendications précédentes, lesdites première et/ou deuxième et/ou troisième plaques bipolaires ne comportant pas de symétrie de rotation autour d'une ligne passant par le centre de la plaque dans le sens vertical de l'empilement de plaques.

11. Unité de pile à combustible à hydrogène selon la revendication 10, lesdites première et/ou deuxième et/ou troisième plaques bipolaires comprenant deux ouvertures de collecteur ou plus et une symétrie de rotation des ouvertures de collecteur existant sur chaque plaque.

12. Unité de pile à combustible à hydrogène selon l'une quelconque des revendications précédentes, chacune desdites première, deuxième et troisième plaques bipolaires étant de même conception.

13. Unité de pile à combustible à hydrogène selon la revendication 12, lesdites plaques bipolaires adjacentes tournant de 180 degrés les unes par rapport aux autres.

14. Plaque bipolaire selon l'une quelconque des revendications précédentes, emboutie à partir d'une seule feuille de métal ou d'alliage, par ex. un acier.

15. Procédé de fabrication d'une plaque bipolaire, comprenant
(i) la fourniture d'une feuille de métal ou d'alliage ;
(ii) l'emboutissage de la feuille pour former une plaque bipolaire comprenant une pluralité de canaux de flux d'hydrogène et une pluralité de canaux de flux d'oxygène,
lesdites plaques bipolaires pouvant être utilisées pour fabriquer une unité de pile à combustible à hydrogène selon l'une quelconque des revendications 1 à 13.

16. Procédé de fabrication d'une pile à combustible à hydrogène, comprenant
(i) la fourniture d'une première plaque bipolaire comportant une face avant et une face arrière, la face arrière étant une anode, et une deuxième plaque bipolaire comportant une face avant et une face arrière, la face avant étant une cathode et la face arrière étant une anode,
(ii) le positionnement d'un premier ensemble membrane-électrode entre les première et deuxième plaques bipolaires,
lorsque le premier ensemble membrane-électrode se trouve entre les première et deuxième plaques bipolaires, un trajet de flux étant situé entre la face arrière de la première plaque bipolaire et le premier ensemble membrane-électrode pour le flux d'hydrogène, et un trajet de flux étant situé entre la face avant de la deuxième plaque bipolaire et le premier ensemble membrane-électrode pour le flux d'oxygène,
(iii) la fourniture d'une troisième plaque bipolaire comportant une face avant et une face arrière, la face avant étant une cathode, et
(iv) le positionnement d'un second ensemble membrane-électrode entre les deuxième et troisième plaques bipolaires,
lorsque le second ensemble membrane-électrode se trouve entre les deuxième et troisième plaques bipolaires :
un trajet de flux étant situé entre la face arrière de la deuxième plaque bipolaire et le second ensemble membrane-électrode pour le flux d'hydrogène,
un trajet de flux étant situé entre la face avant de la troisième plaque bipolaire et le second ensemble membrane-électrode pour le flux d'oxygène, et
le trajet de flux pour le flux d'hydrogène et le trajet de flux pour le flux d'oxygène étant sensiblement transversaux l'un par rapport à l'autre,
lesdites plaques bipolaires comprenant des canaux pour le flux d'hydrogène et des canaux pour le flux d'oxygène et lesdits canaux de flux d'hydrogène et d'oxygène étant sensiblement transversaux les uns par rapport aux autres, et
lesdits canaux de flux d'oxygène étant formés par une indentation dans la plaque bipolaire et lesdits canaux de flux d'hydrogène transversaux comprenant une encoche dans l'indentation qui forme les canaux de flux d'oxygène, ou vice versa, c'est-à-dire lesdits canaux de flux d'hydrogène étant formés par une indentation dans la plaque bipolaire et lesdits canaux de flux d'oxygène transversaux comprenant une encoche dans l'indentation qui forme les canaux de flux d'hydrogène.

17. Procédé selon la revendication 16, lesdites plaques bipolaires étant toutes de même conception, les plaques adjacentes étant tournées de 180 degrés les unes par rapport aux autres.
